Europäisches Patentamt

European Patent Office

Office européen des brevets

(11) Veröffentlichungsnummer: **0 490 366 B1**

(12) **EUROPÄISCHE PATENTSCHRIFT**

(45) Veröffentlichungstag der Patentschrift: **01.03.95**

(21) Anmeldenummer: **91121264.5**

(22) Anmeldetag: **11.12.91**

(51) Int. Cl.⁶: **B60P  1/64**, B60P 7/13

(54) **Transportfahrzeug mit Wechselaufbau.**

(30) Priorität: **13.12.90 DE 4039872**

(43) Veröffentlichungstag der Anmeldung:
**17.06.92 Patentblatt  92/25**

(45) Bekanntmachung des Hinweises auf die
Patenterteilung:
**01.03.95 Patentblatt  95/09**

(84) Benannte Vertragsstaaten:
**AT BE CH DE FR LI NL**

(56) Entgegenhaltungen:
**EP-A- 0 025 557**
**FR-A- 2 497 161**
**GB-A- 1 203 023**
**US-A- 4 071 274**

(73) Patentinhaber: **EMIL DAUTEL GMBH**
**Dieselstrasse 33**
**D-74211 Leingarten (DE)**

(72) Erfinder: **Dautel, Helmut**
**Augelbaumstrasse 72**
**W-7105 Leingarten (DE)**
Erfinder: **Kilgus, Karlheinz**
**U.-Hahn-Strasse 16**
**W-7124 Bönnigheim (DE)**

(74) Vertreter: **Clemens, Gerhard, Dr.-Ing. et al**
**Patentanwaltskanzlei**
**Müller, Clemens & Hach**
**Lerchenstrasse 56**
**D-74074 Heilbronn (DE)**

**Beschreibung**

Die vorliegende Erfindung betrifft ein Transportfahrzeug mit einem Fahrgestell mit Wechselvorrichtung, einem auf das Fahrgestell mit Wechselvorrichtung lösbar aufsetzbarem Wechselaufbau, mit einer Hubeinrichtung, mit einer Steuereinrichtung zum Steuern der Hubeinrichtung und mit an der Wechselvorrichtung und an dem Wechselaufbau angeordneten Verriegelungselementen, die beim Aufsetzen des Wechselaufbaus jeweils miteinander lösbar in Eingriff bringbar sind, wobei der Wechselaufbau beim Aufsetzen eine Senkbewegung und Verriegelungsbewegung und beim Absetzen eine Entriegelungsbewegung und Hebebewegung durchführt.

Das Einsatzgebiet derartiger Fahrzeuge mit Wechselaufbau ist vielfältig. So werden derartige Fahrzeuge im Container-Verkehr eingesetzt. Vielfach werden solche Fahrzeuge mit Wechselaufbau auch für den Fall verwendet, daß, abhängig vom jeweiligen momentanen Einsatzgebiet des Fahrzeugs, unterschiedliche Aufbauten erforderlich sind, beispielsweise eine LKW-Pritsche, einen Möbelkoffer, einen Kipper oder einen Transportbetonbehälter. Der Einsatz derartiger Wechselaufbauten ermöglicht es, das jeweilige Fahrzeug optimal auszunutzen und jeweils für den Benutzungsfall den gerade benötigten Wechselaufbau zur Verfügung zu haben. So ist beispielsweise in der Bauindustrie erwünscht, Transportfahrzeuge für unterschiedlichste Einsatzmöglichkeiten zur Verfügung zu haben. Um hohe Betonierkapazitäten abdecken zu können, die meist an bestimmten Terminen bei Fertigstellung von Bauabschnitten auftreten, wird die erforderliche Anzahl an im Fuhrpark vorhandenen Fahrzeugen mit einem Wechselaufbau mit einem Transportbetonbehälter ausgestattet. Ansonsten können dieselben Fahrzeuge in der übrigen Zeit als Fahrzeuge mit einem Pritschen- oder Kipperaufbau zum Transport von Schalmaterial, Bausteinen, Erdaushub oder ähnlichem Gut eingesetzt werden. Dadurch gestaltet sich der Einsatz derartiger Fahrzeuge wirtschaftlich, da nicht für jeden Einsatzzweck ein voll ausgerüstetes Fahrzeug angeschafft werden muß, sondern nur ein entsprechender Wechselaufbau.

Für das Aufsetzen bzw. Absetzen des Wechselaufbaus müssen geeignete Wechselsysteme vorhanden sein, die ein schnelles und sicheres Wechseln gestatten. Neben dem Wechseln des Aufbaus ist auch für eine sichere Verriegelung des auf dem Fahrzeug aufgesetzten Wechselaufbaus zu gewährleisten. Der eigentliche Wechselvorgang wird vielfach mit einem fahrzeugeigene Wechselsystem durchgeführt. Hierbei wird der Wechselaufbau vom Fahrzeug gelöst und angehoben, um auf dafür vorgesehene Stützvorrichtungen abgesetzt zu werden. Nach dem Absetzen des Wechselsaufbaus auf der Stützvorrichtung kann das Fahrzeug unter dem Wechselaufbau herausfahren und an anderer Stelle einen andersgearteten Wechselaufbau aufnehmen.

Bei derartigen Transportfahrzeugen werden zum Bewegen des Wechselaufbaus verschiedene Hubeinrichtungen, teils mechanischer, pneumatischer und hydraulischer Art verwendet. Bevorzugt wird hierbei ein Hydrauliksystem mit Hydraulikzylindern eingesetzt.

Die konstruktive Verwirklichung derartiger Wechselsysteme gestaltet sich recht aufwendig. Dies liegt zum einen daran, daß bei Lastkraftwagenchassis, insbesondere für Wechselaufbauten verschiedener Ausgestaltung oft eine große Zahl von für das Fahrzeug notwendigen oder für die verschiedenen Ausgestaltungen erforderlichen Einrichtungen, wie beispielsweise Treibstofftanks, Batteriehalterungen, Luftkessel, Hydraulikpumpen, Steuerungen, Hydrauliktanks und dergleichen an bestimmten Stellen am Fahrzeug untergebracht werden müssen, so daß das für die Wechselaufbaukonstruktion zu Verfügung stehende Raumangebot relativ begrenzt ist. Hinzu kommt, daß eine Standardisierung nur schwer zu erreichen ist, da die Fahrzeugabmessungen und die Lage der zusätzlichen Einrichtungen und damit das Raumangebot für die Wechselaufbaukonstruktion von Fahrzeugtyp zu Fahrzeugtyp sehr schwankt, da die LKW-Hersteller bei der Konstruktion des Fahrgestells in diesem Bereich keine genormten Abmessungen oder Bauteilanordnungen verwenden müssen.

STAND DER TECHNIK

Aus der DE-A-30 49 507 A1 ist ein Transportfahrzeug mit Wechselaufbau der eingangs genannten Art bekannt. Bei diesem bekannten Fahrzeug sind in einem Hebehydraulikkreislauf betriebene Hub-Senk-Zylinder-Kolben-Aggregate vorhanden, die den Wechselaufbau unter einem hydraulischen Aufsetzdruck absenken und heben. Hierzu sind auf beiden Seiten des Fahrzeugs in Fahrtrichtung gesehen jeweils im Bereich zwischen dem Führerhaus des Fahrzeugs und dem Wechselaufbau und im hinteren Bereich der Hinterachse des Fahrzeugs zwei Aggregate vorhanden, wobei die vorderen Aggregate oberhalb der Oberkante der Wechselvorrichtung und die hinteren beiden Aggregate unterhalb der Oberkante der Wechselvorrichtung angeordnet sind. Daneben ist mindestens ein in einem Schiebehydraulikkreislauf betriebenes Schiebe-Zylinder-Kolben-Aggregat vorhanden, das mit einem Schiebestangenkopf in eine Mitnahmevorrichtung eingreift und den Wechselaufbau relativ zur Wechselvorrichtung verschiebt. Die Schiebebewegung zum Verriegeln bzw. Entriegeln des Wechselaufbaus und die Hubbewegung zum Heben bzw. Absenken des Wechselaufbaus sind hierbei miteinander zwangsgekoppelt, indem nämlich der Schiebehydraulikkreislauf mit dem Hebehydraulikkreislauf direkt parallel geschaltet ist und zwar so, daß einerseits Zylinderräume für die Senk- und Verriegelungsbewegung und andererseits Zylinderräume für die Entriegelungs- und die Hebebewegung hydraulisch gekoppelt sind. Zur Sicherung des mit der Wechselvorrichtung verriegelten Wechselaufbaus sind Sicherungsmittel vorhanden, die den aufgesetzten und verriegelten Wechselaufbau gegen unbeabsichtigtes Verschieben sichern. Diese Sicherungsmaßnahme ist insbesondere deshalb erforderlich, um beispielsweise beim Anfahren die infolge der Massenträgheit des Aufbaus entstehenden entgegen der Fahrtrichtung wirkenden Kräfte aufnehmen zu können, was insbesondere bei Sattelaufliegern erforderlich wird, da hier sehr große Kräfte auftreten.

Ein derartiges Wechselsystem hat sich hinsichtlich der Zuverlässigkeit, Sicherheit und Bedienungsfreundlichkeit in der Praxis bewährt. Jedoch ist trotzdem noch ein relativ hoher baulicher Aufwand insbesondere hinsichtlich des Hydraulikkreislaufsystems mit den Hub- und Schiebeaggregaten erforderlich. Ein weiteres Problem besteht darin, daß im Bereich zwischen den beiden Hauptträgern des Fahrgestells, in dem in der Regel das Schiebeaggregat angeordnet ist, häufig beengte Platzverhältnisse vorliegen, da für das Fahrzeug oder für den Wechselaufbau benötigte Einrichtungen in diesem Bereich angeordnet werden, was von Fahrzeugtyp zu Fahrzeugtyp in unterschiedlichem Maße ausgeprägt ist. Dies wiederum steht einer gewünschten Standardisierung entgegen, was sich insgesamt ungünstig auf einen wirtschaftlichen Einsatz derartiger Wechselsysteme auswirkt.

DARSTELLUNG DER ERFINDUNG

Der Erfindung liegt die Aufgabe zugrunde, ein Fahrzeug mit Wechselaufbau anzugeben, das hinsichtlich des Wechsel- und Sicherungsvorganges einen hohen Bedienungskomfort bei gleichzeitig sicherer Bedienungsfunktion aufweist, das konstruktiv einfach aufgebaut ist und das die Verwendung standardisierter Teile unabhängig von dem jeweiligen Fahrzeugtyp gestattet, so daß neben einer wirtschaftlich günstigen Fertigung eine einfache und technisch präzise Montage der Bauteile für die Hubeinrichtung ermöglicht wird.

Das erfindungsgemäße Transportfahrzeug ist hinsichtlich des Aufsetzens bzw. Absetzens des Wechselaufbaus durch die Merkmale des Anspruchs 1 und hinsichtlich der Sicherung des aufgesetzten Wechselaufbaus durch die Merkmale des Anspruchs 12 gegeben. Vorteilhafte Ausgestaltungen und Weiterbildungen sind Gegenstand von Unteransprüchen.

Die hinsichtlich des Absetz- bzw. Aufsetzvorgangs gegebene Erfindung zeichnet sich dementsprechend dadurch aus, daß durch die Hubbewegung der Hubeinrichtung, die bevorzugt zumindest ein Kolben-Zylinder-Aggregat aufweist, die Senkbewegung und die Verriegelungsbewegung zum Aufsetzen des Wechselaufbaus und/oder die Entriegelungsbewegung und die Hebebewegung zum Absetzen des Wechselaufbaus ausgelöst und/oder durchgeführt wird.

Dadurch, daß an die Hubbewegung des Kolben-Zylinder-Aggregats eine Folgebewegung gekoppelt wird, sei es nun die Verriegelungs-/Entriegelungsbewegung, sei es nun die Hebe-/Senkbewegung, kann das im Stand der Technik erforderliche Schiebe-Zylinder-Kolben-Aggregat entfallen. Mit dem Wegfall dieses Aggregats wird die Struktur des Hydrauliksystems deutlich vereinfacht, was neben geringerem apparativem Aufwand auch eine kostengünstigere Montage zur Folge hat. Hinzu kommt eine gesteigerte Standardisierungsmöglichkeit, da die Kolben-Zylinder-Aggregate, die lediglich eine Hubbewegung durchführen, auf fahrzeugtypunabhängigen problemlosen Stellen am Fahrzeug montiert werden können, insbesondere im Bereich oberhalb der Fahrzeuglängsträger des Fahrzeugchassis.

Eine vorteilhafte Ausgestaltung des erfindungsgemäßen Transportfahrzeugs zeichnet sich dadurch aus, daß das Kolben-Zylinder-Aggregat im wesentlichen parallel zur Hebe- bzw. Senkbewegungsrichtung des Wechselaufbaus angeordnet ist, das Kolben-Zylinder-Aggregat die Hebe- bzw. Senkbewegung des Wechselaufbaus durchführt und das Kolben-Zylinder-Aggregat auf eine Verschiebevorrichtung einwirkt, die aufgrund der Hubbewegung des Kolben-Zylinder-Aggregat vor der Hebebewegung bzw. nach der Senkbewegung die Entriegelungs- bzw. Verriegelungsbewegung des Wechselaufbaus durchführt. Die direkte Kopplung der Hubbewegung mit einer Verschiebevorrichtung läßt besonders einfache konstruktive Ausgestaltungen zu. Insbesondere kann hierbei die Verschiebevorrichtung direkt im Bereich des Kolben-Zylinder-Aggregats angeordnet werden. Dies ist deshalb von Vorteil, da Kolben-Zylinder-Aggregate in der Regel im Bereich der beiden Hauptträger des LKW-Chassis angeordnet sind, die den Wechselaufbau tragen. In diesem Bereich ist jedoch genügend Raum vorhanden, um die Verschiebekonstruktion unterzubringen, da dieser Bereich aufgrund des aufzusetzenden Wechselaufbaus von den LKW-Herstellern häufig freigehalten wird.

In der Praxis hat es sich als besonders vorteilhaft herausgestellt, nur von einem Kolben-Zylinder-Aggregat ausgehend den Verschiebevorgang einzuleiten, d. h. es gibt nur eine Verschiebevorrichtung. Hierbei ist besonders von Vorteil, daß bei der Montage entschieden werden kann, ob die Verschiebebewegung von dem linken oder rechten Kolben-Zylinder-Aggregat ausgehen soll (in Fahrtrichtung gesehen). Damit kann beengten Platzverhältnissen ausgewichen werden und der Anschlußbereich am Fahrgestellrahmen desjenigen Kolben-Zylinder-Aggregats, das auf keine Verschiebevorrichtung einwirkt, bzw. der Anschlußbereich des Führungstragprofils kann frei gestaltet und der räumlichen Situation angepaßt werden.

In einer konstruktiv besonders einfachen und leicht herstellbaren Ausführungsvariante ist die Verschiebevorrichtung als am Fahrgestell drehbar gelagerter Hebel ausgebildet, wobei der Hebel eine erste Ausnehmung aufweist, in die das Kolben-Zylinder-Aggregat direkt oder indirekt in Eingriff bringbar ist und der Hebel eine zweite Ausnehmung aufweist, in die eine am Wechselaufbau vorhandene Mitnehmervorrichtung, die bevorzugt als nachstellbarer Bolzen ausgebildet ist, lösbar in Eingriff bringbar ist, wobei durch die Hubbewegung des Kolben-Zylinder-Aggregats der Hebel um einen vorgebbaren Winkel im bzw. gegen den Uhrzeigersinn gedreht wird und der Hebel während seiner Drehung auf die Mitnehmervorrichtung einwirkt, wodurch der Wechselaufbau die Verriegelungs- bzw. Entriegelungsbewegung durchführt. Bei dieser Ausführungsform wird also zunächst die Hubbewegung des Kolben-Zylinder-Aggregats in eine Drehbewegung des Hebels umgesetzt, wobei infolge dieser Drehbewegung eine Verschiebung des Wechselaufbaus erfolgt. Die Nachstellbarkeit des Bolzens gewährleistet, daß ein unter Umständen auftretender Verschleiß ausgeglichen werden kann, so daß der Wechselaufbau beim Verschieben immer seine definierte Endlage erreicht.

Die bei dem Verschiebevorgang (Verriegeln bzw. Entriegeln) des Wechselaufbaus auftretenden Querkräfte, die normalerweise direkt auf das Kolben-Zylinder-Aggregat einwirken, werden bevorzugt über ein Führungselement aufgenommen, das an das Kolben-Zylinder-Aggregat angeschlossen ist und das auf die Verschiebevorrichtung einwirkt, wobei das Führungselement selbst in einem Führungstragprofil geführt wird.

Eine konstruktiv besonders elegante Lösung wird dadurch erreicht, daß das Führungselement als Führungsbüchse ausgebildet ist, die in einem kreiszylindrischen Führungstragprofil geführt wird, wobei die Achse des Führungsprofils im wesentlichen koaxial zur Achse des Kolben-Zylinder-Aggregats angeordnet ist. Durch das Führungsprofil wird gewährleistet, daß das Kolben-Zylinder-Aggregat weitgehend von Querkräften freigehalten wird, so daß die Kolbenstange bei der Durchführung der Hubbewegung keinen störenden Einflüssen ausgesetzt ist, die beispielsweise eine erhöhte Leckage zur Folge haben könnten.

In einer hinsichtlich der Fertigung besonders günstigen Ausführungsvariante weist die Führungsbüchse eine Ausnehmung auf, derart, daß die Ausnehmung der Führungsbüchse bereichsweise mit der ersten Ausnehmung der Verschiebevorrichtung in Eingriff bringbar ist. Damit ist durch konstruktiv einfache Maßnahmen die Zwangskopplung der Verschiebebewegung des Wechselaufbaus (Verriegeln bzw. Entriegeln) mit der Hubbewegung des Kolben-Zylinder-Aggregats gewährleistet.

Eine besonders vorteilhafte Weiterbildung des erfindungsgemäßen Transportfahrzeugs zeichnet sich dadurch aus, daß das Kolben-Zylinder-Aggregat im wesentlichen parallel zur Entriegelungs- bzw. Verriegelungsbewegungsrichtung angeordnet ist, das Kolben-Zylinder-Aggregat die Entriegelungs- bzw. Verriegelungsbewegung durchführt und das Kolben-Zylinder-Aggregat auf eine Hubvorrichtung einwirkt, die aufgrund der Hubbewegung des Kolben-Zylinder-Aggregats nach der Entriegelungsbewegung bzw. vor der Verriegelungsbewegung die Hub- bzw. Senkbewegung des Wechselaufbaus durchführt.

Nachdem das Kolben-Zylinder-Aggregat durch seine Hubbewegung die Verriegelungs- bzw. Entriegelungsbewegung des Wechselaufbaus durchgeführt hat, wird an die weitere Hubbewegung des Kolben-Zylinder-Aggregats eine Folgebewegung gekoppelt, die im wesentlichen senkrecht zur genannten Bewegungsrichtung verläuft und über eine Hubvorrichtung durchgeführt wird. Das im wesentlichen parallel zur Entriegelungs- bzw. Verriegelungs-Bewegung des Wechselaufbaus angeordnete Kolben-Zylinder-Aggregat ermöglicht konstruktiv einfache Lösungen, da die Längsachse des Aggregats in diesem Fall im wesentlichen parallel zur Längsachse der Träger des Fahrgestells angeordnet ist, so daß auch hier nahezu keine Schwierigkeiten hinsichtlich des zur Montage benötigten Platzes auftreten.

Bevorzugt ist die Hubvorrichtung als Hubschwinge ausgebildet, die beispielsweise am Fahrgestell gelenkig angeschlossen ist, auf der der Wechselaufbau gelenkig gelagert ist und deren Neigung durch einen am Kolben-Zylinder-Aggregat angelenkten und auf die Hubschwinge einwirkenden Hebel infolge der Hubbewegung des Kolben-Zylinder-Aggregats veränderbar ist, wodurch der Wechselaufbau eine Hebe- bzw. Senkbewegung durchführt. Die Ausbildung der Hubvorrichtung als Hubschwinge läßt besonders einfache konstruktive Ausgestaltungsmöglichkeiten zu.

In einer vorteilhaften Ausgestaltung des erfindungsgemäßen Transportfahrzeugs mit Wechselaufbau ist an das Kolben-Zylinder-Aggregat eine Aufnahmevorrichtung angeschlossen, in die eine am Wechselaufbau vorhandene Mitnehmervorrichtung, die bevorzugt als nachstellbarer Bolzen ausgebildet ist, lösbar in Eingriff bringbar ist, wobei das Kolben-Zylinder-Aggregat nach einem der Länge der Entriegelungs- bzw. Verriege-

4

lungsbewegung entsprechenden Freihub auf die Hubeinrichtung einwirkt.

Ein hohes Maß an Funktionalität und Zuverlässigkeit wird erzielt, wenn nach einer weiteren vorteilhaften Ausgestaltung des erfindungsgemäßen Transportfahrzeugs das Transportfahrzeug auf beiden Seiten, in Fahrtrichtung gesehen, im vorderen Bereich zwischen dem Führerhaus des Transportfahrzeugs und dem Wechselaufbau ein vorderes Kolben-Zylinder-Aggregat und im Bereich der Hinterachse des Fahrzeugs ein hinteres Kolben-Zylinder-Aggregat aufweist, wobei die Kolben-Zylinder-Aggregate gleiche Kolbendurchmesser und gleiche Kolbenstangendurchmesser aufweisen und in Gleichlaufschaltung in Reihe geschaltet sind. Bevorzugt werden hierbei die Zylinder der Kolben-Zylinder-Aggregate derart geschaltet, daß Kolbenstangenräume mit Kolbenstangenräumen und Kolbenräume mit Kolbenräumen verbunden und Zu- und Ablauf entweder an Kolbenstangenräumen oder an Kolbenräumen angeschlossen sind.

Als besonders günstig hinsichtlich der Ausnutzung des vorhandenen Platzangebotes für die Montage hat es sich herausgestellt, die vorderen Kolben-Zylinder-Aggregate als Zugzylindereinheiten, die über dem Fahrzeugrahmen angeordnet sind, und die hinteren Kolben-Zylinder-Aggregate als Druckzylindereinheiten auszubilden. Mit dieser Lösung werden die Aggregate an den räumlich problemlosen Stellen im Bereich der Hinterachse unterhalb der Wechselaufbauunterkante und im vorderen Bereich an einem bei der Wechselbewegung nicht störenden Ort nämlich oberhalb des Fahrzeugsrahmens belassen. Derartige Hubeinrichtungen sind einer Standardisierung zugänglich. Durch Verwendung unterschiedlicher Anschlußelemente für unterschiedliche Fahrzeugtypen können derartige Hubeinrichtungen serienmäßig vorgefertigt und auf LKW-Chassis, Sattelfahrzeuge oder Anhänger mit Drehschemeln problemlos montiert werden. Durch die Wahl der besonderen Gleichlaufschaltung wird ohne weitere Steuerungsmaßnahme sichergestellt, daß alle Zylinder der Kolben-Zylinder-Aggregate stets mit gleichen Wegen ausfahren oder einfahren, und somit der Wechselaufbau ganz gleich, wie seine Belastung verteilt ist, stets gleichmäßig angehoben bzw. abgesetzt wird, so daß ein Verrutschen der Ladung und Unfälle dadurch vermieden werden.

Die Variabilität des Wechselsystems wird dadurch noch erhöht, daß die Verschiebevorrichtung jeweils an den vorderen und/oder hinteren Kolben-Zylinder-Aggregaten angeordnet sein kann. Gleiches gilt auch für die Führungselemente, die die beim Verschiebevorgang (Ver- bzw. Entriegeln) des Wechselaufbaus auftretenden Querkräfte aufnehmen. Je nach vorliegenden Platzverhältnissen bei den jeweils unterschiedlichen Fahrzeugtypen kann entschieden werden, wo die Verschiebevorrichtung bzw. die Führungselemente angeordnet werden.

Zu einem besonders einfachen Aufbau des Hydraulikkreislaufes gelangt man, wenn die nicht an der Entriegelungs- bzw. Verriegelungsbewegung beteiligten Kolben-Zylinder-Aggregate einen der Länge der Entriegelungs- bzw. Verriegelungsbewegung entsprechenden Leerhub aufweisen. Durch diese Maßnahme müssen die nicht an der Verschiebebewegung beteiligten Aggregate nicht einzeln angesteuert werden um nach erfolgter Verschiebebewegung die Hebebewegung des Wechselaufbaus durchzuführen. Dadurch kann der apparative Aufbau für den Hydraulikkreislauf bzw. die Steuereinrichtung deutlich verringert werden.

Das erfindungsgemäße Transportfahrzeug betreffend die Sicherung des aufgesetzten Wechselaufbaus ist durch die Merkmale des unabhängigen Anspruchs 21 gegeben. Vorteilhafte Ausgestaltung und Weiterbildungen sind Gegenstand der nachfolgenden Unteransprüche.

Das erfindungsgemäße Transportfahrzeug zeichnet sich dementsprechend dadurch aus, daß durch die Hubbewegung des zumindest einen Kolben-Zylinder-Aggregats beim Absetzen des Wechselaufbaus vor dem Durchführen der Entriegelungsbewegung die Sperrvorrichtung entsperrt wird und beim Aufsetzen des Wechselaufbaus nach dem Durchführen der Verriegelungsbewegung die Sperrvorrichtung den Wechselaufbau selbsttätig sperrt. Auch hier wird die Hubbewegung des zumindest einen Kolben-Zylinder-Aggregats gekoppelt mit einer Bewegung zum Entsperren der Sperrvorrichtung, wobei der Wechselaufbau während dieser Hubbewegung noch keine Verschiebung erfährt. Erst nach dem Entsperren der Sperrvorrichtung durch die Hubbewegung wird durch eine weitere Hubbewegung der Wechselaufbau entriegelt und anschließend infolge der Hubbewegung des Kolben-Zylinder-Aggregats angehoben.

Die Sperrwirkung der Sperrvorrichtung kann durch Formschluß oder durch Kraftschluß erzielt werden, wobei der Form- bzw. Kraftschluß unter Einwirkung des Kolben-Zylinder-Aggregats hergestellt werden kann.

Eine konstruktiv besonders einfache Weiterbildung zeichnet sich dadurch aus, daß die Sperrvorrichtung derart gelagert ist, daß sie unter Wirkung ihres Eigengewichts selbsttätig sperrt. Als zusätzliche Sicherungsmaßnahme kann eine Sicherungsvorrichtung vorgesehen werden, die die Sperrvorrichtung im Sperrzustand in ihrer Lage Sichert und die durch die Hubbewegung des Kolben-Zylinder-Aggregats entsichert wird.

Bevorzugt wird ein dreehbar gelagertes Sperrglied verwendet, das bereichsweise eine Kontur aufweist, die im gesperrten Zustand des Wechselaufbaus formschlüssig mit einem am Fahrzeug befestigen Bauteil mit entsprechender Gefenkontur lösbar eingreift, und das Sperrglied selbst durch die Hubbewegung des Kolben-Zylinder-Aggregats so weit verschoben wird, daß der Welchselaufbau entsperrt ist. Um den baulichen Aufwand weiter zu reduzieren, wird in einer bevorzugten Ausführungsform als Bauteil mit der

EP 0 490 366 B1

Gegenkontur, in die das Sperrglied lösbar eingreift, der Zylinderkopf des Kolben-Zylinder-Aggregats verwendet.

Dadurch, daß nicht an der Sperrbewegung bzw. Entsperrbewegung beteiligte Kolben-Zylinder-Aggregate einen der Länge der Hubbewegung für die Sperrung entsprechenden Leerhub aufweisen, ist ein Hydrauliksystem mit einfacher Struktur möglich, das ohne großen apparativen Aufwand montiert werden kann.

Weitere Ausführungsformen und Vorteile der Erfindung sind den in den Antsprüchen weiterhin aufgeführten Merkmalen sowie in den nachstehend angegebenen Ausführungsbeispielen zu entnehmen. Die Merkmale der Ansprüche können in beliebiger Weise miteinander kombiniert werden, insoweit sie sich nicht offensichtlich gegenseitig ausschließen.

KURZE BESCHREIBUNG DER ZEICHNUNG

Die Erfindung sowie vorteilhafte Ausführungsformen und Weiterbildungen derselben werden im folgenden anhand der in der Zeichnung dargestellten Ausführungsbeispiele näher beschrieben und erläutert. Die der Beschreibung und der Zeichnung zu entnehmenden Merkmale können einzeln für sich oder zu mehreren in beliebiger Kombination angewandt werden. Es zeigen:

Fig. 1     schematische Seitenansicht eines erfindungsgemäßen Transportfahrzeugs mit einer Verschiebevorrichtung bei aufgesetztem Wechselaufbau,

Fig. 2     schematische Seitenansicht eines erfindungsgemäßen Transportfahrzeugs mit Verschiebevorrichtung bei entriegeltem Wechselaufbau,

Fig. 3     schematische Seitenansicht eines erfindungsgemäßen Transportfahrzeugs mit Verschiebevorrichtung bei angehobenem Wechselaufbau,

Fig. 4     perspektivische Detailansicht eines Transportfahrzeugs mit Verschiebevorrichtungen zum Durchführen der Ent- bzw. Verriegelungsbewegung des Wechselaufbaus,

Fig. 5     schematische Seitenansicht einer als Drehhebel ausgebildeten Verschiebevorrichtung, die mit einem Führungselement in Eingriff steht, bei verriegeltem Wechselaufbau,

Fig. 6     Verschiebevorrichtung gemäß Fig. 5 bei entriegeltem Wechselaufbau,

Fig. 7     schematischer Horizontalschnitt durch eine Verschiebevorrichtung mit Führungselement gemäß Fig. 5,

Fig. 8     schematischer Schalt- und Anordnungsplan der Kolben-Zylinder-Aggregate,

Fig. 9     schematische Seitenansicht eines mit einer Hubschwinge gekoppelten Kolben-Zylinder-Aggregats bei aufgesetztem Wechselaufbau,

Fig. 10    Kolben-Zylinder-Aggregat gemäß Fig. 9 mit angehobenem Wechselaufbau,

Fig. 11    schematische Seitenansicht einer mit einem Kolben-Zylinder-Aggregatin Eingriff stehenden Sperrvorrichtung bei aufgesetztem Wechselaufbau,

Fig. 12    Sperrvorrichtung gemäß Fig. 11 bei entriegeltem Wechselaufbau,

Fig. 13    Sperrvorrichtung gemäß Fig. 11 bei angehobenem Wechselaufbau,

Fig. 14    schematische Seitenansicht einer unter Eigengewicht selbsttätig sperrenden Sperrvorrichtung mit Sicherungsvorrichtung bei aufgesetztem Wechselaufbau,

Fig. 15    Sperrvorrichtung gemäß Fig. 14 in entsperrtem Zustand,

Fig. 16    Sperrvorrichtung gemäß Fig. 14 bei entriegeltem Wechselaufbau,

Fig. 17    schematische Seitenansicht der Sicherungsvorrichtung gemäß Fig. 14 in vergrößerter Darstellung

Fig. 18    Sicherungsvorrichtung gemäß Fig. 17 in entsicherter Position,

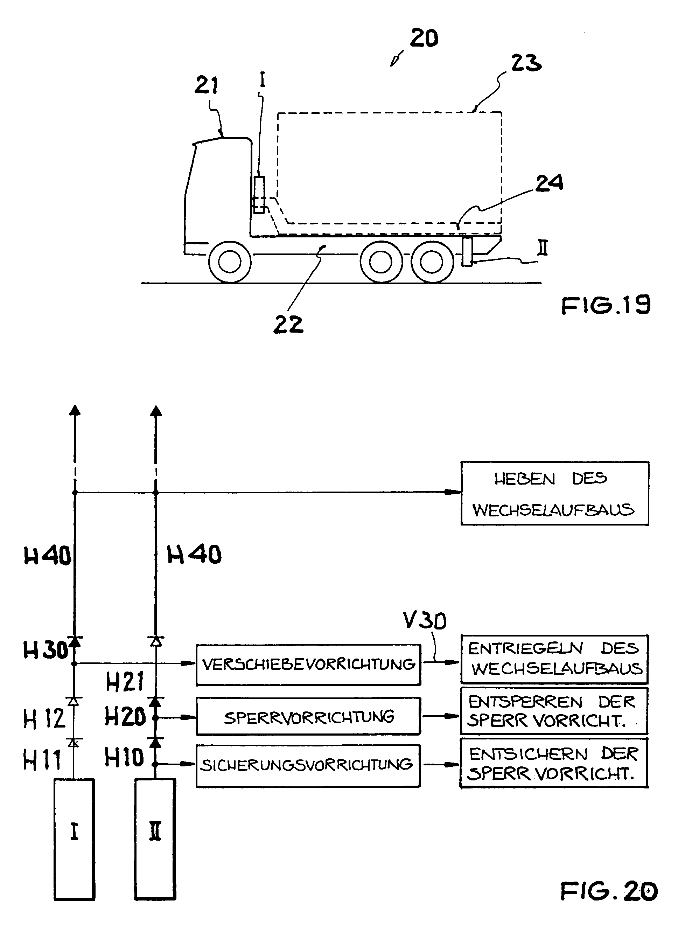

Fig. 19    schematische Seitenansicht eines Transportfahrzeuges mit vorderen und hinteren Kolben-Zylinder-Aggregaten und

Fig. 20    Ablaufdiagramm und Darstellung der an die Hubbewegung der Kolben-Zylinder-Aggregate gekoppelten Folgebewegungen.

WEGE ZUM AUSFÜHREN DER ERFINDUNG

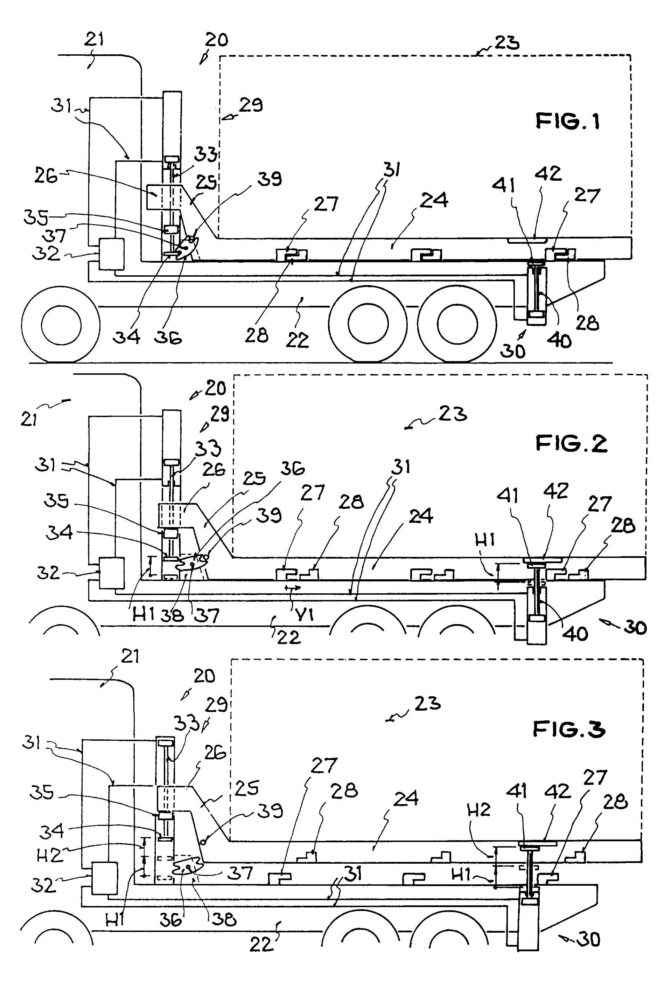

Ein Transportfahrzeug 20 weist ein Führerhaus 21 und ein Fahrgestellrahmen mit Fahrgestellängsträgern 22 auf. Weiterhin ist ein in den Fig. 1 bis 3 gestrichelt dargestellter Wechselaufbau 23 vorhanden, der auf einem Wechselaufbaurahmen angeordnet ist, der Längsholme 24 aufweist, wobei im vorderen Bereich des Wechselaufbautraggestells die Längsholme 24 schwanenhalsartig verlaufen, derart daß eine schräg nach vorne verlaufende Auflagerstrebe 25 und ein an die Auflagerstrebe 25 horizontal anschließender Auflagerträger 26 vorhanden ist.

6

Oberseitig an dem Fahrgestell-Längsträger 22 sind Verriegelungselemente 27 angeordnet, die eine nach hinten weisende Ausnehmung aufweisen. In diese Ausnehmung greift jeweils ein an den Längsholmen 24 angeordnetes Verriegelungselement 28 bei aufgesetztem Wechselaufbau 23 ein. Im Bereich zwischen Führerhaus 21 und Wechselaufbau 23 ist ein vorderes Kolben-Zylinder-Aggregat 29 oberhalb des Fahrgestell-Längsträgers 22 befestigt angeordnet, das als Zugaggregat ausgebildet ist. Ein weiteres Kolben-Zylinder-Aggregat 30 ist im hinteren Bereich des Transportfahrzeugs 20 unterhalb der Oberkante des Fahrgestelllängsträgers 22 vorhanden. Das Aggregat ist als Druckaggregat ausgebildet. Das vordere Aggregat 29 und das hintere Aggregat 30 sind über ein Hydraulikkreislaufsystem mit Hydraulikleitungen 31 und einer Steuereinrichtung 32 und eine nicht dargestellten Antriebseinrichtung miteinander verbunden. Die Schaltanordnung des Hydrauliksystems wird weiter unten näher beschrieben.

Das vordere Kolben-Zylinder-Aggregat 29 weist eine Kolbenstange 33 mit einem Zylinderkopf 34 auf. An die Kolbenstange 33 ist ein Tragarm 35 angeschlossen, der zur Aufnahme des Auflagerträgers 26 des Wechselaufbautragrahmens geeignet ist Im Anschlußbereich des vorderen Aggregats 29 an den Fahrgestell-Längsträger 22 ist auf der dem Wechselaufbau 23 zugewandten Seite eine als Drehhebel 36 ausgebildete Verschiebungseinrichtung vorhanden, die mittels einem Bolzen 37 und in Fig. 1 bis 3 gestrichelt dargestellten Knotenblechen 38 drehbar an den Fahrgestellrahmen angeschlossen ist. Dieser Hebel 36 weist eine erste Ausnehmung auf, in die der Zylinderkogf 34 bei aufgesetztem Wechselaufbau 23 lösbar in Eingriff steht. Desweiteren weist der Hebel 36 eine zweite U-förmige Ausnehmung auf, die mit einem an der Auflagerstrebe 25 des Wechselaufbaurahmens angeordnetes Bolzen 39 bei aufgesetztem Wechselaufbau 23 in Eingriff steht.

Im folgenden wird nun beschrieben, wie der Absetzvorgang abläuft. Ausgehend von Fig. 1 (aufgesetzter Wechselaufbau 23) führt das vordere Kolben-Zylinder-Aggregat 29 und das hintere Kolben-Zylinder-Aggregat 30 eine Hubbewegung der Länge H1 durch. Durch diese Hubbewegung H1 dreht das vordere Kolben-Zylinder-Aggregat 29 den Drehhebel 36 im Uhrzeigersinn, da der Zylinderkopf 34 mit der ersten Ausnehmung des Hebels 36 in Eingriff steht. Gleichzeitig wird durch die Drehung des Hebels der Wechselrahmen mit Wechselaufbau 23 nach hinten verschoben, da der Bolzen 39 an der Flanke der U-förmigen zweiten Ausnehmung des Hebels 36 anliegt. Nach Durchführen des Hubweges H1 ist dann der Wechselaufbau 23 um das Maß V1 so weit nach hinten verschoben, daß die Verriegelungselemente 27, 28 jeweils nicht mehr miteinander in Eingriff stehen. Gleichzeitig befindet sich der Zylinderkopf 34 des vorderen Kolben-Zylinder-Aggregats nicht mehr in Eingriff mit der ersten Ausnehmung des Hebels 36. Die Kolbenstange 40 des hinteren Kolben-Zylinder-Aggregats 30 ist nunmehr so weit ausgefahren, daß der Zylinderkopf 41 des hinteren Kolben-Zylinder-Aggregats 30 an einer am Längsholm 24 vorhandenen Kragplatte 42 anliegt (Fig. 2).

Der an der vorderen Kolbenstange 33 angeordnete Trägerarm 35 liegt nunmehr an dem Auflagerträger 26 des Wechselaufbaurahmens an. Durch eine weitere Hubbewegung der Länge H2 des vorderen und des hinteren Kolben-Zylinder-Aggregats wird nun der Wechselaufbau mit Wechselaufbaurahmen um das Maß H2 angehoben. Nach dem Durchführen der Hubbewegung H2 wird der Wechselrahmen auf in den Fig. 1 bis 3 nicht dargestellte Stützen abgesetzt. Nunmehr kann das Transportfahrzeug unter dem Wechselaufbau herausfahren und einen weiteren zur Verfügung stehenden Wechselaufbau aufnehmen.

Der Aufsetzvorgang des Wechselaufbaus auf das Fahrzeug läuft entsprechend in umgekehrter Reihenfolge ab. Nachdem das Fahrzeug unter den Wechselaufbau gefahren ist und der Wechselaufbau im Verhältnis zum Fahrzeug die richtige Position einnimmt, werden die Kolben-Zylinder-Aggregate ausgefahren derart, daß die den Wechselaufbau vormals stützenden Stützeinrichtungen entlastet werden. Nach Entfernen der Stützeinrichtungen wird der Wechselaufbau durch die umgekehrte Hubbewegung der Kolben-Zylinder-Aggregate zunächst auf die Fahrgestell-Längsträger 22 des Fahrgestellrahmen aufgesetzt (Hubweg H2) und daran anschließend durch die an die Hubwegbewegung H1 gekoppelte Verschiebbewegung (V1) nach vorne verschoben, derart daß die an dem Fahrgestellrahmen und an dem Wechselrahmen angeordneten Verriegelungselemente jeweils miteinander in Eingriff kommen.

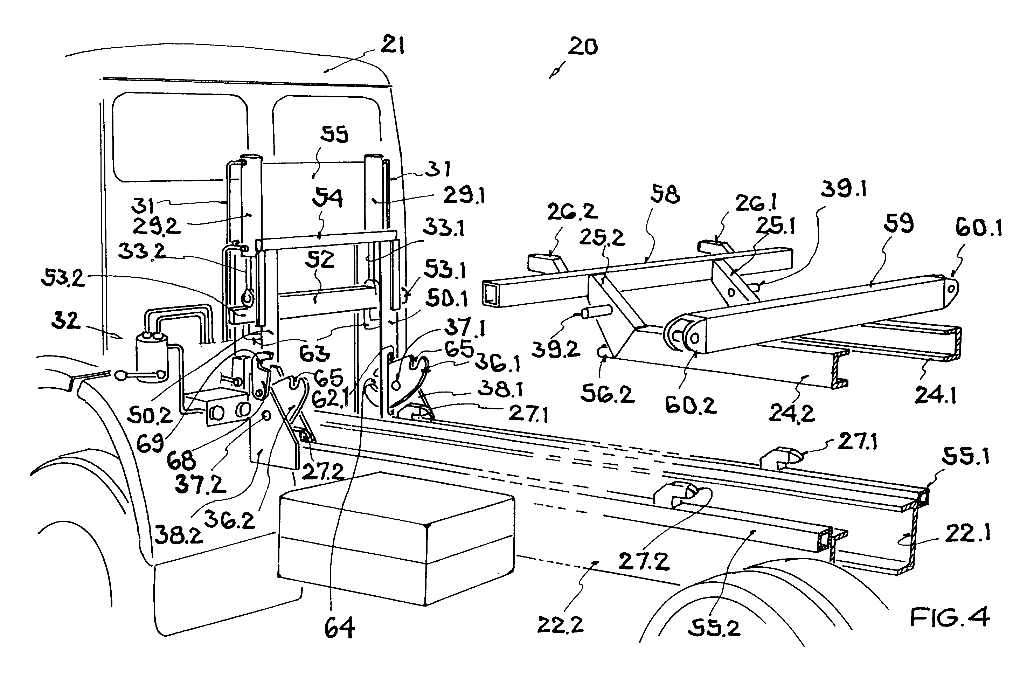

Bei der in Fig. 4 dargestellten perspektivischen Teilansicht eines Transportfahrzeugs 20 sind gleiche Teile, die bereits bei Beschreibung der Fig. 1 bis 3 genannt wurden, mit denselben Bezugszeichen versehen, wobei infolge des zur Längsrichtung teilweise symmetrischen Aufbaus des Fahrgestells und des Wechselaufbaus gleiche Bezugszeichen verwendet werden und zwar für die in Fahrtrichtung gesehen rechtsseitig angeordneten Bauteile mit der Ergänzung .1 und für die in Fahrtrichtung gesehen linksseitig angeordneten Bauteile mit der Ergänzung .2. Das vordere Kolben-Zylinder-Aggregat 29.1, 29.2 ist über dem linken Fahrgestell-Längsträger 22.2 bzw. rechten Fahrgestell-Längsträger 22.1 angeordnet, das die beim Wechselvorgang auf die vorderen Kolben-Zylinder-Aggregate 29.1, 29.2 einwirkenden Kräfte auf die Fahrgestell-Längsträger 22.1, 22.2 abträgt. Der an die Kolbenstange 33.1, 33.2 angeschlossene Zylinderkopf ist in einem Tragprofil 50.1, 50.2 geführt. An die Kolbenstange 33.1, 33.2 ist jeweils ein durchgehender, die beiden Kolbenstangen verbindender, Jochtragbalken 52 angeschlossen, der auf beiden Seiten der Kolben-Zylinder-Aggregate 29 mit einem relativ kleinen Kragarm 53.1, 53.2 übersteht, der eine Auflagerfläche bildet zur Lagerung des Auflagerträgers 26 des Wechselaufbaus bei aufgesetztem Wechselaufbau.

Zwischen den beiden vorderen Kolben-Zylinder-Aggregaten 29.1, 29.2 ist im oberen Bereich eine Querstrebe 54 und ein Hydrauliköl vorratsbehälter 55 angeordnet, der über ein nicht dargestellte Verbindungsleitung mit einer nicht dargestellten Hydraulikpumpeinrichtung in Verbindung steht, die die Druckbeaufschlagung in Verbindung mit dem Steuergerät 32 und den Hydraulikleitungen 31 der jeweiligen Kolben-Zylinder-Aggregate ermöglicht.

Bei dieser Ausführungsvariante sind die Verriegelungselemente 27 des Fahrzeugs direkt auf einem Quadratrohr 55.1, 55.2 gelagert, das jeweils an dem Fahrgestell-Längsträger 22.1, 22.2 im oberen flanschseitigen Bereich fahrzeugaußenseitig an diesen Träger angeschlossen ist. An dem dem Führerhaus 21 des Transportfahrzeuges 20 zugewandten Ende der Längsholme 24 des Wechselaufbaurahmens sind Verriegelungselemente 56 angeordnet, die kragarmmäßig in Verlängerung der Längsholme 24 über dieselben hinausragen und in entsprechende auf dem Fahrgestell vorhandene Verriegelungselemente 27 bei aufgesetztem Wechselaufbau eingreifen.

Zur Stabilisierung des Wechselaufbaurahmens ist im Bereich der Auflagerstreben 25.1, 25.2 ein Querträger 58 angeordnet, der als quadratisches Profil ausgebildet ist. Bei dem in Fig. 4 nur ausschnittsweise gezeigtem Wechselaufbaurahmen ist eine Quertraverse 59 dargestellt, die auf den Längsholmen 24 gelagert ist und die auf ihrem rechten bzw. linken Ende ein Kipplager 60.1, 60.2 aufweist. Der hierzu gehörige Kippaufbau ist in Fig. 4 der Übersichtlichkeit halber nicht dargestellt.

Im Anschlußbereich der vorderen Kolben-Zylinder-Aggregate 29 an die Fahrgestell-Längsträger 22 sind auf beiden Seiten des Fahrgestell-Längsträgers Knotenbleche 38.1, 38.2 an den Fahrgestell-Längsträger 22 und das Tragprofil 50 angeschlossen. Der Übersichtlichkeit halber ist das dem Bildbetrachter zugewandte Knotenblech am rechten Fahrgestell-Längsträger 22.1 in Fig. 4 nicht dargestellt. Zwischen diesen Knotenblechen 38.1, 38.2 ist der drehbar gelagerte Hebel 36 angeordnet, derart daß er bereichsweise über einen Schlitz 62 in das Innere des Tragprofils 50 hineinragt. An diesem in das Innere des Tragprofils 50 hineinragenden Bereich ist eine erste Ausnehmung 64 vorhanden, in die ein an der Kolbenstange 33 des Kolben-Zylinder-Aggregats 29 bzw. dem Jochträger 52 angeschlossenes Eingriffsteil 63 lösbar in Eingriff bringbar ist. In seinem dem Wechseltragrahmen zugewandten Bereich des Hebels 36 ist eine U-förmige zweite Ausnehmung 65 vorhanden, in die der an der Auflagerstrebe 25 angeordnete Bolzen 39 des Wechselaufbautragrahmens bei aufgesetztem Wechselaufbau lösbar eingreift.

Am linken Knotenblech 38.2 ist eine Sperrklinke 68 drehbar angeschlossen, die eine Ausnehmung 69 aufweist. Die Sperrklinke 68 kann nun manuell betätigt werden, so daß bei aufgesetztem Wechselaufbau der Bolzen 39.2 mit der Ausnehmung 69 der Sperrklinke 68 in Eingriff kommt und somit eine zusätzliche Lagesicherung des Wechselaufbaus gewährleistet ist.

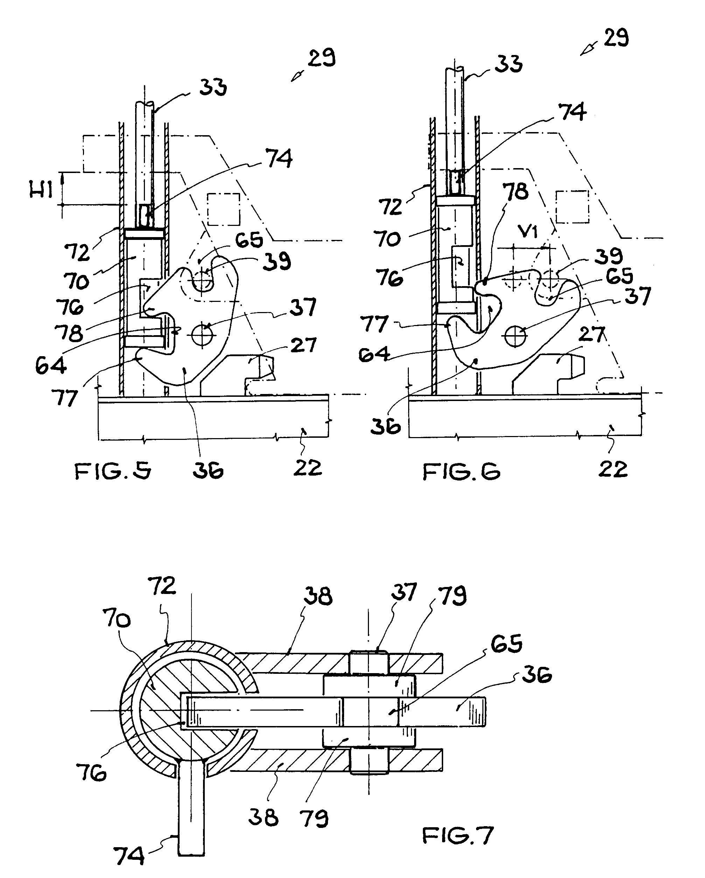

Die Bewegung des Hebels 36 infolge der Hubbewegung H1 des Kolben-Zylinder-Aggregats ist in den Fig. 5 und 6 dargestellt. Im Unterschied zu der in Fig. 4 dargestellten Ausführungsform ist eine an die Kolbenstange 33 angeschlossene Führungsbüchse 70 vorhanden, die in einem kreiszylindrischen Querschnitt 72 geführt wird. Des weiteren ist an die Kolbenstange 33 ein Tragarm 74 angeschlossen, auf dem der Wechselaufbau beim Anheben bzw. Absenken aufliegt. Die Führungsbüchse 70, die als Vollkreisquerschnitt ausgebildet ist, weist eine rechteckförmige Ausnehmung 76 auf, derart, daß die Führungsbüchse 70 mit der ersten Ausnehmung 64 des Hebels 36 bei aufgesetztem Wechselaufbau bereichsweise lösbar in Eingriff kommt. Die erste Ausnehmung 64 weist einen unteren Hebelvorsprung 77 und einen oberen Hebelvorsprung 78 auf. Bei aufgesetztem Wechselaufbau kommt der obere Hebelvorsprung 78 im Bereich der Ausnehmung 76 der Führungsbüchse 70 zu liegen. Die Unterseite der Führungsbüchse 70 ist mit dem unteren Hebelvorsprung 77 in Kontakt. Infolge der Hubbewegung der Kolbenstange 33 nach oben wird nun die untere Innenseite der Ausnehmung 76 gegen den oberen Hebelvorsprung 78 gedrückt. Daraufhin verdreht sich der Hebel 36 um seinen Gelenkpunkt (Bolzen 39) im Uhrzeigersinn infolge der Hubbewegung so weit, bis der obere Hebelvorsprung 78 nicht mehr mit der unteren Innenseite der Ausnehmung 76 in Kontakt steht. Durch die Drehung des Hebels 36 wird der Wechselaufbau horizontal verschoben, da der am Wechselaufbau angeordnete Bolzen 39 mit der zweiten Ausnehmung 65, die in etwa U-förmig ausgebildet ist, lösbar in Eingriff steht. Nachdem der Wechselaufbau die zum Entriegeln benötigte Wegstrecke V1 zurückgelegt hat, kann nunmehr der Wechselaufbau durch eine weitere Hubbewegung vom Fahrgestell-Längsträger 22 abgehoben werden. Beim Aufsetzen des Wechselaufbaus laufen die Vorgänge in entsprechend umgekehrter Reihenfolge ab. Bei abgesetztem Wechselaufbau 36 nimmt der Hebel 36 infolge einer nicht dargestellten Feder die in Fig. 6 dargestellte Lage ein. Dies kann auch dadurch gewährleistet werden, daß der Schwerpunkt des Hebels 36 rechts vom Bolzen 37 liegt.

8

Das Anordnen der Führungsbüchse 70 in einem kreiszylindrischen Führungstragprofil 72 hat den großen Vorteil, daß die beim Verschiebevorgang des Wechselaufbaus auftretenden Querkräfte nicht direkt auf die Kolbenstange 33 einwirken, sondern durch das Tragprofil 72 abgetragen werden. Dies wirkt sich günstig auf das Leckage-Verhalten der Kolben-Zylinder-Aggregate aus. Beim Anheben bzw. Abheben des Wechselaufbaus wirkt die auf den Tragarm 74 einwirkende Auflagerkraft exzentrisch zur Achse des Kolben-Zylinder-Aggregats, was zu zusätzlichen Schnittkräften führt. Diese Schnittkräfte werden ebenfalls über das Führungstragprofil abgetragen und wirken nicht direkt auf die Kolbenstange 33 ein. An das Führungstragprofil 72 und an den Fahrgestell-Längsträger 22 sind jeweils zwei Knotenbleche 38 (Fig. 7) angeschlossen, zwischen denen der Hebel 36 angeordnet ist. Sowohl die Knotenbleche 38 als auch der Hebel 36 weisen eine Bohrung auf, durch die der Bolzen 39 hindurchgesteckt wird. Im Bereich der Bolzenbohrung ist der Hebel 36 auf beiden Seiten mit einer Querschnittsverstärkung 79 versehen.

In einer nicht dargestellten Ausführungsvariante ist eine Führungsbüchse vorhanden, die ebenfalls eine rechteckförmige Ausnehmung aufweist, die jedoch in Längsrichtung größere Abmessungen besitzt als die Ausnehmung 76. Dabei ist der Hebel so zur Führungsbüchse 70 angeordnet, daß das Kolben-Zylinder-Aggregat und damit die an die Kolbenstange angeschlossene Führungsbüchse zunächst einen Leerhub durchführt, bevor die untere Innenseite der Ausnehmung gegen den oberen Hebelvorsprung des Hebels gedrückt wird. Während des Leerhubs können weitere zu dem Kolben-Zylinder-Aggregat beispielsweise parallelgeschaltete Aggregate eine Hubbewegung durchführen, die den Wechselaufbau entsichern und/oder entsperren. Die Entsicherung und die Entsperrung des Wechselaufbaus vor dem Durchführen der Entriegelungsbewegung wird weiter unten beschrieben.

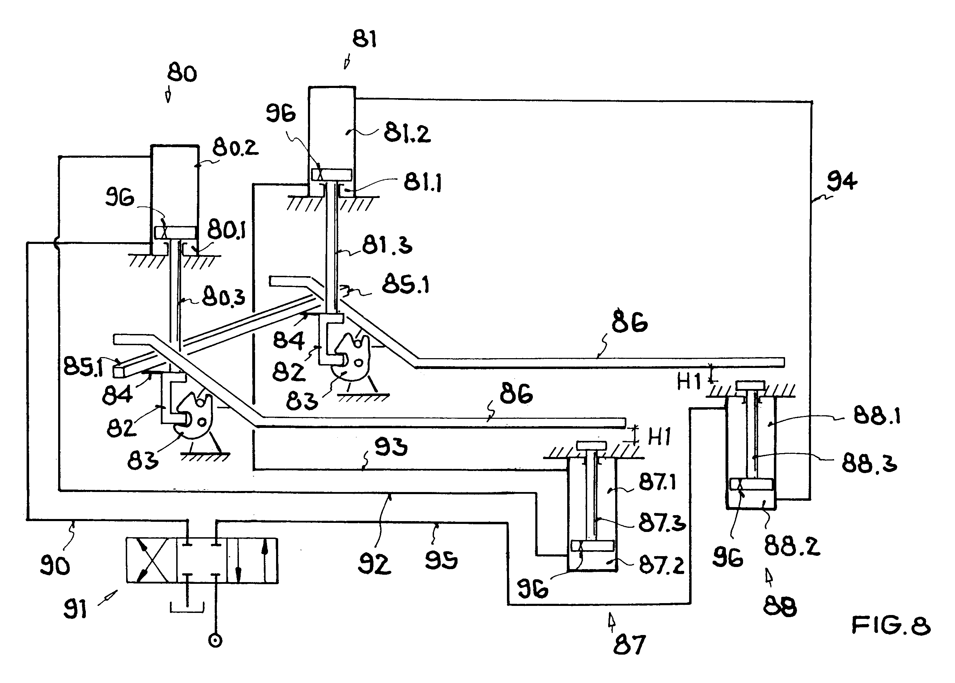

Bei der in Fig. 8 dargestellten vereinfachten Schaltungsanordnung des Hydraulikkreislaufs ist ein linkes vorderes Kolben-Zylinder-Aggregat 80 und ein rechtes vorderes Kolben-Zylinder-Aggregat 81 vorhanden, das jeweils einen Kolbenstangenraum 80.1, 81.1 und einen Kolbenraum 80.2, 81.2 aufweist. Bei beiden Aggregaten ist jeweils eine Kolbenstange 80.3, 81.3 vorhanden, die beim Ab- bzw. Aufsetzvorgang des Wechselaufbaus auf Zug beansprucht wird. An ihrem außenseitigen Ende ist an jeder Kolbenstange jeweils ein Eingriffselement 82 befestigt, das mit einem am Fahrzeug drehbar gelagerten Hebel 83 lösbar in Eingriff bringbar ist, wobei sich durch die Hubbewegung der Hebel verdreht und der Wechselaufbau in der oben beschriebenen Art und Weise verschoben wird. Gleichzeitig ist an jedem Eingriffselement 82 ein schematisch dargestellter Kragträger 84 angeschlossen, auf dem ein die beiden Aggregate verbindender Jochträger 85 gelagert ist, der jeweils nach außen einen Überstand 85.1, 85.2 aufweist. Beim Hebevorgang des Wechselaufbaus dienen diese Überstandsbereiche 85.1, 85.2 als Auflager für den vorderen Bereich der Längsholme 86 des Wechselaufbaus.

Im hinteren Bereich der Längsholme 86 ist jeweils unterhalb der Längsholme ein linkes hinteres Kolben-Zylinder-Aggregat 87 und ein rechtes hinteres Kolben-Zylinder-Aggregat 88 angeordnet. Beide Aggregate weisen jeweils einen Kolbenstangenraum 87.1, 88.1, einen Kolbenraum 87.2, 88.2 und eine Kolbenstange 87.3, 88.3 auf, die beim Wechselvorgang des Wechselaufbaus auf Druck beansprucht wird.

Die hinteren Kolben-Zylinder-Aggregate 87, 88 weisen einen Leerhub H1 auf, der dem Hub entspricht, den die vorderen Kolben-Zylinder-Aggregate 80, 81 benötigen um über den Hebel 83 die Verschiebebewegung V1 zum Entriegeln des Wechselaufbaus durchzuführen.

Die Kolbenstangen der vorderen Kolben-Zylinder-Aggregate 80, 81 und der hinteren Kolben-Zylinder-Aggregate 87, 88 müssen nun, um den Wechselaufbau anzuheben, gleichzeitig um völlig gleiche Beträge ein- bzw. ausgefahren werden, so daß ein paralleles Anheben des Wechselaufbaus erfolgt. Um ein paralleles Anheben zu gewährleisten, sind die Kolbenflächen und auch die Kolbenringflächen aller Zylinder gleich und alle Kolben-Zylinder-Aggregate sind doppelwirkend, also auch im Kolbenstangenraum abgedichtet. Durch die paarweise Anordnung als Druckzylinder und Zugzylinder ist eine Gleichlaufschaltung in einfacher Weise mit Normzylindern möglich. Die Gleichlaufschaltung ist nun so ausgebildet, daß eine Verbindungsleitung 90 von einem Steuerventil 91 zu dem Kolbenstangenraum 80.1 des vorderen linken Kolben-Zylinder-Aggregats 80 führt. Bei Druckbeaufschlagung steigt die Kolbenstange 80.3 nach oben und verdrängt die im darüber befindlichen Kolbenraum 80.2 vorhandene Hydraulikflüssigkeit.

An diesen Kolbenraum 80.2 ist eine Hydraulikleitung 92 angeschlossen, die mit dem Kolbenraum 87.2 des linken hinteren Kolben-Zylinder-Aggregats verbunden ist. Dadurch steigt die Kolbenstange des linken hinteren Kolben-Zylinder-Aggregats 87 nach oben und verdrängt die im darüber befindlichen Kolbenstangenraum 87.1 befindliche Hydraulikflüssigkeit. Dieser Kolbenstangenraum 87.1 ist über eine weitere Leitung 93 an den Kolbenstangenraum des vorderen rechten Kolben-Zylinder-Aggregats angeschlossen. Die Kolbenstange 81.3 des vorderen rechten Kolben-Zylinder-Aggregats 81 bewegt sich somit nach oben und die in dem darüber befindlichen Kolbenraum 81.2 vorhandene Hydraulikflüssigkeit wird über eine weitere Verbindungsleitung 94 in den Kolbenraum des rechten hinteren Kolben-Zylinder-Aggregats 88 verdrängt. Dadurch bewegt sich die Kolbenstange 88.3 des rechten hinteren Kolben-Zylinder-Aggregats 88 nach oben, wodurch die im darüber befindlichen Kolbenraum 88.1 vorhandene Hydraulikflüssigkeit über eine weitere Leitung 95 der Steuereinrichtung 91 zugeführt wird. So wird mit äußerst einfachen Mitteln wegen der zusammengeschalteten Räume mit jeweils gleichen Verdrängungsvolumina eine äußerst günstig herzustellende und zuverlässige Gleichlaufschaltung verwirklicht, die vor allem durch die günstige Unterbringung der Zugzylinder ermöglicht wird. Des weiteren sind in jedem Kolbenleckverlust Ausgleichsventile 96 angeordnet, um stets auch bei unterschiedlichen Leckverlusten gleichmäßiges Anheben und Absenken zu sichern.

Der oben beschriebene Verdrängungskreislauf gilt für das Entriegeln und Anheben des Wechselaufbaus. Dazu ist das Steuerventil 91 in einem in Fig. 8 nach rechts verschobenen Zustand. Beim Absenken und Verriegeln des Wechselvorgangs läuft der Verdrängungsmechanismus umgekehrt ab und das Steuerventil 91 befindet sich in einer nach links verschobenen Stellung.

Neben dem oben geschilderten Hydrauliksystem mit Gleichlaufschaltung könnten auch Hydrauliksysteme mit andersgearteter Schaltungsanordnung verwendet werden. Es muß jedoch bei jedem der eingesetzten Hydrauliksysteme gewährleistet sein, daß die Hubbewegung sämtlicher Zylinder gleichzeitig erfolgt, damit der Wechselaufbau gleichmäßig angehoben bzw. abgesenkt werden kann, um ein Verrutschen der Ladung beim Heben bzw. Senken zu verhindern.

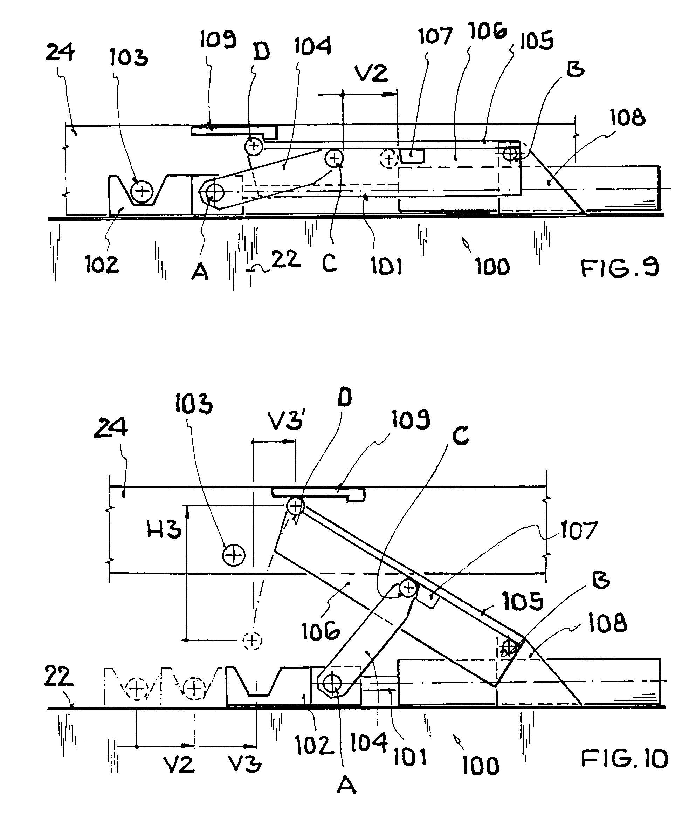

In einer weiteren Ausführungsvariante (Fig. 9, Fig. 10) ist ein Kolben-Zylinder-Aggregat 100 vorhanden, das im wesentlichen parallel zum Fahrgestell-Längsträger 22 angeordnet ist. An die Kolbenstange 101 des Kolben-Zylinder-Aggregats 100 ist an deren außenseitigem Ende eine Mitnehmervorrichtung 102 angeschlossen, die als nach oben offener U-förmiger Querschnitt ausgebildet ist. Bei aufgesetztem Wechselaufbau kommt mit der U-förmigen Mitnehmervorrichtung 102 ein am Längsholm 24 des Wechselaufbaus befestigter Bolzen 103 in Eingriff. Des weiteren ist am äußeren Endbereich der Kolbenstange zwischen der Mitnehmervorrichtung 102 und dem Kolbenstangenende ein Pendelstab 104 gelenkig an die Kolbenstange 101 angeschlossen (Gelenkpunkt A). Dieser Pendelstab 104 ist an den Oberflansch 105 einer Hubschwinge 106 drehbar angelenkt, wobei eine Verschiebung in Längsrichtung bis zu einem Anschlag 107 möglich ist. Die Hubschwinge 106 ist ihrerseits an einer Konsole 108 drehbar angelenkt (Gelenkpunkt B), wobei die Konsole 108 am Fahrgestell-Längsträger 22 befestigt ist. An dem dem Gelenkpunkt B gegenüberliegenden oberseitigen Ende der Hubschwinge 106 liegt die Hubschwinge an einer am Längsholm 24 des Wechselaufbaurahmen befestigten Tragplatte 109 an (Punkt D).

Der Absetzvorgang des Wechselaufbaus auf eine Stützeinrichtung läuft nun folgendermaßen ab: Zunächst fährt die Kolbenstange 101 des Kolben-Zylinder-Aggregats 100 um das Maß V2 ein, wobei der Wechselaufbau dadurch, daß der Bolzen 103 mit der Mitnehmervorrichtung 102 in Eingriff steht, nach rechts verschoben und entriegelt wird. Gleichzeitig gleitet der Pendelstab 104 entlang der Unterseite des Oberflansches 105 der Hubschwinge 106 bis zum Anschlag 107. Hat der Anlenkpunkt C den Anschlag 107 erreicht, ist der Wechselaufbau entriegelt. Die weitere Hubbewegung V3 des Kolben-Zylinder-Aggregats 100 bewirkt nun, daß sich die Hubschwinge 106 um den Gelenkpunkt B im Uhrzeigersinn dreht, wodurch der Wechselaufbau um das Maß H3 angehoben wird. Bei der Hebebewegung des Wechselaufbaus führt derselbe eine zusätzliche Horizontalbewegung V3′ durch, die die horizontale Komponente der eine Kreisbahn um Punkt B beschreibende Hebebewegung des Punktes D darstellt (Reibschluß zwischen Punkt D und Tragplatte 109 vorausgesetzt).

In dem Ausführungsbeispiel gemäß den Fig. 9 und 10 führt also die Hubbewegung des Kolben-Zylinder-Aggregats 100 direkt zu einer Verriegelung bzw. Entriegelung des Wechselaufbaus und die daran anschließende Hubbewegung löst über eine an das Aggregat gekoppelte Hubschwinge die Hebe- bzw. Senkbewegung des Wechselaufbaus als Folgebewegung aus.

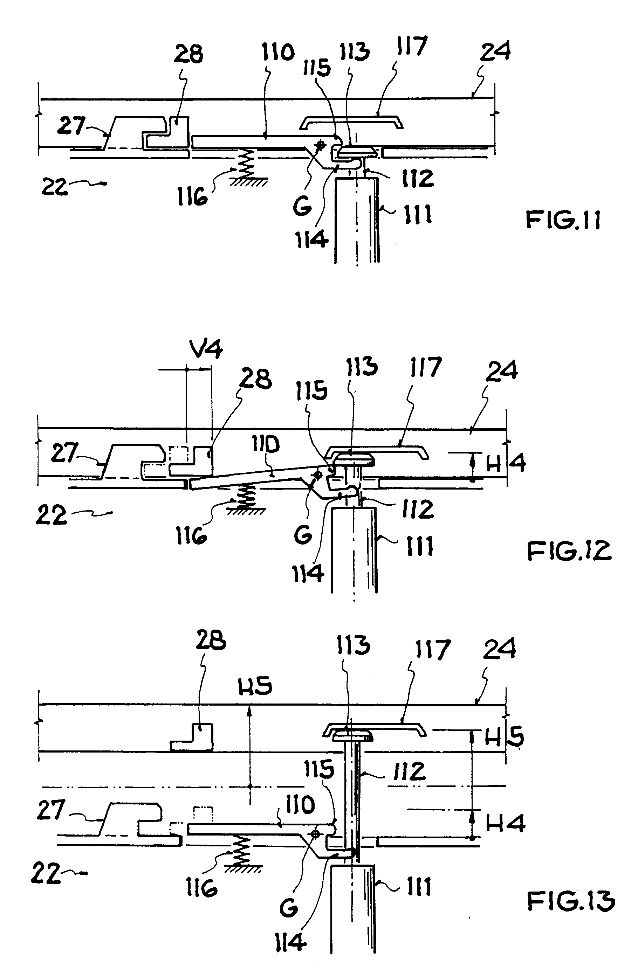

Um entgegen der Fahrtrichtung wirkende große Kräfte aufnehmen zu können, ist in einem weiteren Ausführungsbeispiel (Fig. 11 bis 13) ein gelenkig (Gelenkpunkt G) am Fahrgestellträger 22 befestigter Sperrhebel 110 vorgesehen. Dieser Sperrhebel 110 wird durch die Hubbewegung eines Kolben-Zylinder-Aggregats 110 entsperrt, so daß eine Entriegelung des aufgesetzten Wechselaufbaus möglich ist. Die Kolbenstange 112 des Kolben-Zylinder-Aggregats 110 weist an ihrem außenseitigen Ende einen Kopf 113 auf, der bei aufgesetztem Wechselaufbau mit einem Ende des Sperrhebels formschlüssig in Eingriff steht. Hierzu ist an dem Sperrhebel 110 in diesem Endbereich ein unterer Vorsprung 114 und ein oberer Vorsprung 115 vorhanden. Der untere Vorsprung 114 untergreift den Kopf 113 und hat eine an die Form der Kolbenstange angepaßte Ausnehmung. Der obere Vorsprung 115 ist so ausgebildet, daß er zunächst an dem Kopf 113 anliegt. Beim Ausfahren der Kolbenstange um den Hubweg H4 wird nun der Sperrhebel 110 um seinen Gelenkpunkt G um ein bestimmtes Maß entgegen dem Uhrzeigersinn gedreht, da der Kopf 113 für eine vorgegebene Hublänge an dem oberen Vorsprung 115 anliegt. Dieses Verdrehen des Sperrhebels 110 erfolgt entgegen der Wirkung einer auf den Sperrhebel 110 einwirkenden Feder 116. Durch diese Drehbewegung des Sperrhebels 110 kann nunmehr der Wechselaufbau entriegelt werden, da der Sperrhebel 110 nicht mehr am Verriegelungselement 28 ansteht und dieses sperrt. Nach erfolgter Entriegelung des Wechselaufbaus durch horizontales Verschieben desselben durch ein nicht dargestelltes Kolben-Zylinder-Aggregat um das Maß V4 kann der Wechselaufbau durch die Hubbewegung (H5) der Kolben-Zylinder-Aggregate angehoben werden, da nunmehr der Kopf 113 an einer an dem Längsholm 24 befestigen Trägerplatte 117 anliegt. Beim Aufsetzen wird der Hebel 110 entgegen der Feder 116 verdreht, so daß ein Einfahren des Kopfes 113 in den Endbereich des Sperrhebels möglich ist. Bei dieser Lösung geschieht das Entsperren unter der Einwirkung eines Kolben-Zylinder-Aggregates. Weiterhin wirkt in diesem Fall die Feder 116 nicht nur als Rückstellelement zum Sperren des Wechselaufbaus sondern auch als Sicherung gegen unbeabsichtigtes Entsperren.

Es ist auch möglich, was in den Fig. 11 bis 13 nicht dargestellt ist, den Sperrvorgang durch ein Kolben-Zylinder-Aggregat auszulösen, wobei zumindest ein nicht am Sperrvorgang beteiligtes Aggregat einen Freihub aufweist. Bei Gleichlaufsystemen verhält es sich allgemein so, daß die nicht am Entsperr-/Sperrvorgangbeteiligten Kolben-Zylinder-Aggregate während des Entsperrvorgangs vor dem Entriegeln bzw. während des Sperrvorgangs nach dem Verriegeln einen Freihub aufweisen.

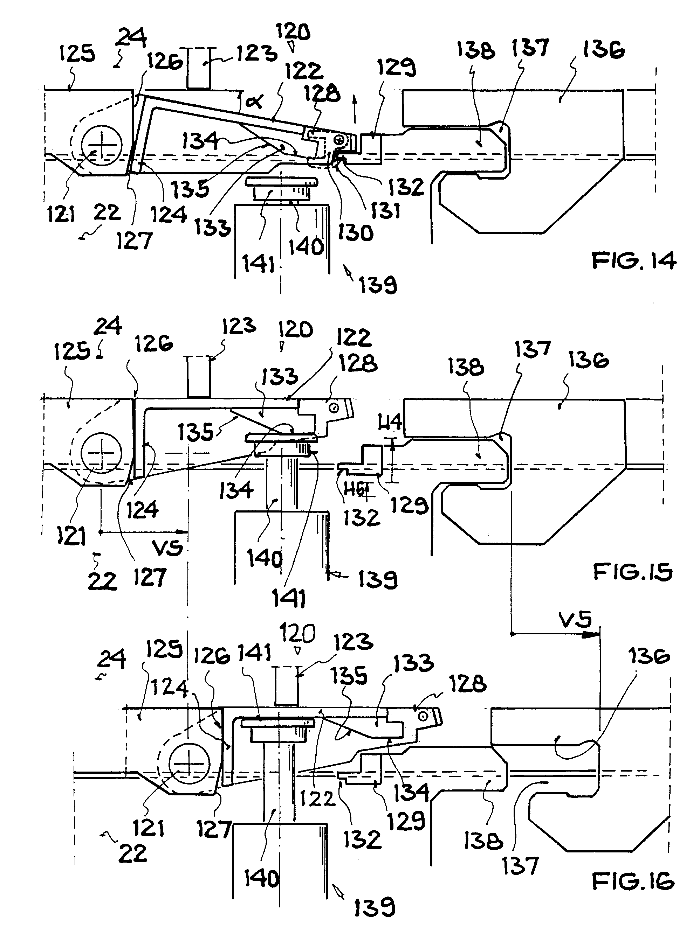

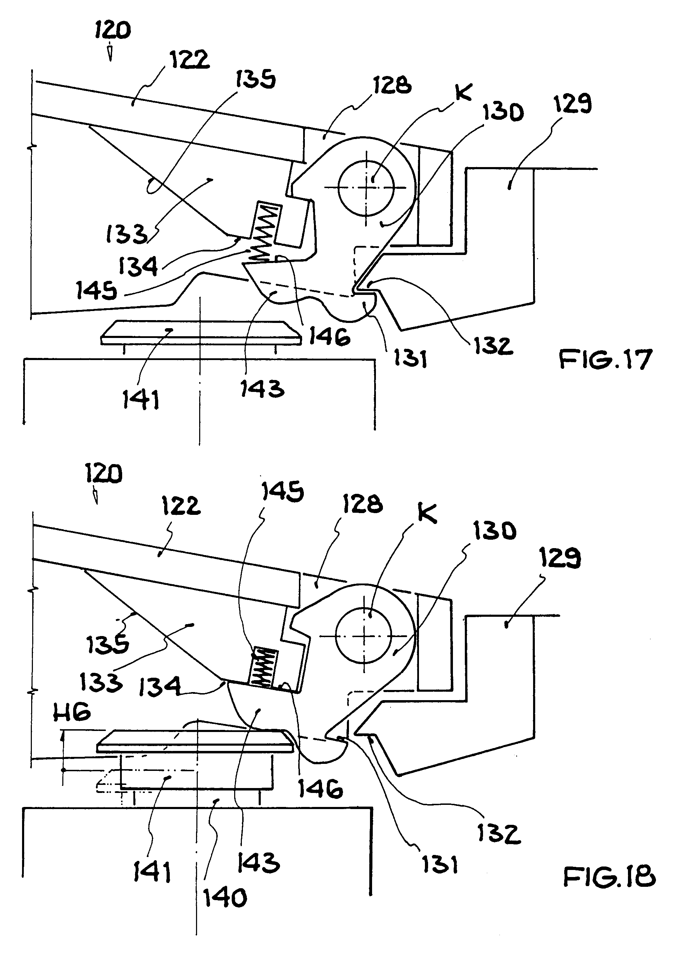

In den Fig. 14 bis 16 ist ein Sperrhebel 120 dargestellt, der unter Wirkung seines Eigengewichts selbsttätig sperrt. Der Sperrhebel 120 ist über einen Bolzen 121 drehbar am Längsholm 24 des Wechselaufbaurahmens angeschlossen. Der Sperrhebel 120 dient dazu, entgegen der Fahrtrichtung auftretende auf den Wechselaufbau einwirkende große Kräfte auf die Fahrgestell-Längsträger 22 abzuleiten. Der Sperrhebel 120 weist einen Oberflansch 122 auf, auf dem sich beim Anheben des Wechselaufbaus ein am Wechselaufbau befestiges Kragprofil 123 abstützt. Auf seiner dem Bolzenanschluß zugewandten Seite ist ein senkrecht zum Oberflansch angeordneter Anlageflansch 124 am Sperrhebel 120 vorhanden. Dieser Anlageflansch 124 liegt an einem im Bolzenbereich angeordneten Anlageelement 125 an, das eine erste Anlagefläche 126 und eine zur ersten Anlagefläche geneigte zweite Anlagefläche 127 aufweist. Durch die zueinander geneigten Anlageflächen 126, 127 ist es möglich, den Sperrhebel um einen Winkel $\alpha$ zu verdrehen und zwar ausgehend von einer horizontalen Lage, d. h. der Anlageflansch 124 des Sperrhebels 120 liegt an der ersten Anlagefläche 126 des Anlageelements 125 an, bis zu einer zweiten Lage, im Uhrzeigersinn um den Winkel $\alpha$ gegenüber der ersten Lage verdreht, bei dem der Anlageflansch 124 des Sperrhebels 120 an der zweiten Anlagefläche 127 anliegt. Diese zweite Lage nimmt der Sperrhebel 120 unter alleiniger Wirkung seines Eigengewichts ein. In dem dem Bolzenanschlußbereich gegenüberliegenden Ende des Sperrhebels 120 ist ein Kopfstück 128 vorhanden, das eine Außenkontur aufweist, die mit einem am Fahrgestell-Längsträger 22 befestigten Widerlagerelement 129 bereichsweise übereinstimmt. Bei aufgesetztem Wechselaufbau greift die Kontur des Kopfstücks 128 in die entsprechende Kontur des Widerlagerelements 129 ein, so daß eine Verschiebung des Wechselaufbaus entgegen der Fahrtrichtung nicht möglich ist.

Im Kopfbereich des Sperrhebels 120 ist des weiteren ein Sicherungshebel 130 drehbar (Drehachse 144) an das Kopfstück 128 angeschlossen. Dieser Sicherungshebel 130 (Fig. 17, 18) hat die Funktion, den Sperrhebel 120 in seiner sperrenden Lage zu sichern, insbesondere die beim Fahren infolge unebener Fahrbahn entstehenden, nach oben wirkenden Kräfte auf das Widerlagerelement 129 abzuleiten. Dies erfolgt dadurch, daß der Sicherungshebel einen entgegen der Fahrtrichtung weisenden Vorsprung 131 aufweist, der mit einem am Widerlagerelement 129 vorhandenen in Fahrtrichtung weisenden Vorsprung 132 untergreift. In Fahrtrichtung weist der Sicherungshebel 130 einen Vorsprung 143 mit einer nach oben weisenden Anschlagfläche 146 auf. Des weiteren ist ein an das Kopfstück 128 in Richtung auf den Bolzenanschlußbereich einstückig mit dem Sperrhebel verbundenes unterhalb des Oberflansches 122 verlaufendes Formteil 133 vorhanden, das eine parallel zum Oberflansch 122 verlaufende Anlagefläche 134 und eine zum Oberflansch 122 schräg abfallende zweite Anlagefläche 135 aufweist. Innerhalb der Anlagefläche 134 ist eine Bohrung vorhanden, in der eine Feder 145 angeordnet ist, die bei aufgesetztem Wechselaufbau auf die Anschlagfläche 146 des Sicherungshebels 130 einwirkt, wodurch gewährleistet ist, daß der Vorsprung 131 von dem in Fahrtrichtung weisenden Vorsprung 132 des Sperrhebels 130 sicher untergreift.

In den Fig. 14 bis 16 ist ein Verriegelungselement 136 dargestellt, das an dem Längsholm 24 des Wechselaufbaus befestigt ist und das eine in Fahrtrichtung weisende Ausnehmung 137 aufweist, in die ein am Fahrgestell-Längsträger entsprechend ausgebildetes Verriegelungsprofil 138 bei aufgesetztem Wechselaufbau verriegelnd eingreift. Über diese Verriegelungselemente.werden vornehmlich in und senkrecht zur Fahrtrichtung wirkende Kräfte auf das Fahrgestell des Fahrzeugs abgeleitet.

Unterhalb des Sperrhebels 120 ist ein Kolben-Zylinder-Aggregat 139 mit einer Kolbenstange 140 und mit einem am außenseitigen Ende der Kolbenstange 140 vorhandenes Kopfstück 141 angeordnet. Beim Ausfahren der Kolbenstange 140 um den Hubweg H6 kommt nun das Kopfstück 141 mit dem Sicherungshebel 130 in Kontakt und dreht diesen im Uhrzeigersinn um seinen Gelenkpunkt, bis der Anschlag 146 des Sperrhebels 130 an der Anlagefläche 134 anliegt. Dadurch wird der Sperrhebel 120 entsichert. Im Verlauf der weiteren Hubbewegung der Kolbenstange 140 liegt das Kopfstück 141 an der Unterseite des Sicherungshebels 130 an. Die daran anschließende Hubbewegung hebt den Sperrhebel 120 entgegen dem Uhrzeigersinn an bis der Oberflansch 122 des Sperrhebels 120 an dem Kragprofil 123 des Wechselaufbaus anliegt, wobei das Aggregat insgesamt den Hubweg H4 zurückgelegt hat. In dieser Stellung kann der Wechselaufbau durch Verschieben entgegen der Fahrtrichtung, was von einem nicht dargestellten Aggregat veranlaßt werden kann, entriegelt werden (Verschiebebewegung V5). Bei dieser Verschiebebewegung V5 gleitet das Kopfstück 141 an der zweiten Anlagefläche 135 des Formteils 133 entlang. Nach dem Ausführen der Entriegelungsbewegung V5 liegt das Kopfstück 141 auf der Unterseite des Oberflansches 122 des Sperrhebels an. Die daran anschließende Hubbewegung des Kolben-Zylinder-Aggregats 139 hebt im Zusammenspiel mit in den Fig. 14 bis 16 nicht dargestellten Kolben-Zylinder-Aggregaten den Wechselaufbau an.

Beim Aufsetzen des Wechselaufbaus wird in umgekehrter Reihenfolge verfahren, wobei beim vollständigen Zurückfahren der Kolbenstange 140 des Kolben-Zylinder-Aggregats der Sperrhebel sich unter der Wirkung seines Eigengewichts so weit absenkt, daß sein Anlageflansch 124 an der zweiten Anlagefläche 127 anliegt und die Kontur des Kopfstücks 128 mit der Kontur des Widerlagerelements 129 formschlüssig hinsichtlich der Bewegungsmöglichkeit entgegen der Fahrtrichtung in Eingriff kommt. Der Sicherungshebel 130 greift unter Wirkung der Feder 145 in den Vorsprung 132 ein.

Bei dem in Fig. 18 dargestellten Ablaufdiagramm der Hubbewegung von Kolben-Zylinder-Aggregaten I, II ist entsprechend der jeweiligen Hubbewegung die daran gekoppelte Folgebewegung dargestellt. Dabei kommt ein Aggregatsystem zum Einsatz, das vordere Kolben-Zylinder-Aggregate I aufweist, die zwischen dem Führerhaus 21 und dem Wechselaufbau 23 eines Transportfahrzeugs 20 oberhalb der Fahrgestell-Längsträger angeordnet sind und das Kolben-Zylinder-Aggregate II aufweist, die im hinteren Bereich des Transportfahrzeugs 20 unterhalb des Fahrgestell-Längsträgers 22 angeordnet sind. Das Kolben-Zylinder-Aggregat I ist als Zugaggregat und das Kolben-Zylinder-Aggregat II ist als Druckaggregat ausgebildet. Bei der dargestellten Ausführungsform des Wechselaufbausystems ist ein Auf- bzw. Absetzen des Wechselaufbaus 23 ohne zusätzlichen Einsatz des Bedienpersonals möglich. Die Bedienperson braucht lediglich den Aufsetz- bzw. Absetzvorgang durch jeweils einen Steuervorgang einzuleiten.

Nachdem die Steuereinrichtung des Hydrauliksystems über ein entsprechendes Signal gestartet wird, führt das Kolben-Zylinder-Aggregat II eine Hubbewegung H10 durch, so, daß eine vorhandene Sperrvorrichtung, die die Verschiebung des Wechselaufbaus entgegen der Fahrtrichtung verhindert, entsichert wird. Über die anschließende Hubbewegung H20 wird die Sperrvorrichtung entsperrt. Nach Entsperren der Sperrvorrichtung ist es möglich, den Wechselaufbau zu verschieben, so daß eine Entriegelung stattfindet. Diese Entriegelung des Wechselaufbaus wird durch die Hubbewegung H30 des Aggregats I ausgelöst, die eine Verschiebung des Wechselaufbaus um das Maß V30 zur Folge hat. Zunächst arbeitet das Aggregat I während der Hubbewegung des Aggregats II (H10, H20) im Leerhub (H11, H12).-Unter Leerhub wird hier verstanden, daß das entsprechende Aggregat zwar eine Hubbewegung durchführt, diese Hubbewegung jedoch keine Folgefunktion auslöst. Die daran anschließende Hubbewegung H30 des Aggregats I ist mit der Hubbewegung des Aggregats II gekoppelt, wobei das Aggregat II in diesem Fall im Leerhub (H21) arbeitet. Nach Durchführung der Hubbewegung H30 durch das Aggregat I ist der Wechselaufbau 23 entsperrt und entriegelt und ein Anheben des Wechselaufbaus 23 durch die Aggregate I, II wird durch die Hubbewegung beider Aggregate ermöglicht. Dadurch wird der Wechselaufbau insgesamt durch die Hubbewegung H40 beider Kolben-Zylinder-Aggregate gleichmäßig angehoben. Nach dem Erreichen eines vorgebbaren Hubniveaus können Stützeinrichtungen unter dem Wechselaufbau 23 angeordnet werden, auf die dann der Wechselaufbau durch Umkehrung der Hubbewegung der Kolben-Zylinder-Aggregate abgesetzt wird. Daran anschließend kann das Transportfahrzeug 20 unter dem Wechselaufbau 23 problemlos herausfahren und beispielsweise einen andersgearteten Wechselaufbau aufnehmen.

Zusammenfassend ist in der nachfolgenden Tabelle der in der Figurenbeschreibung dargestellte Zusammenhang zwischen der Hubbewegung der Hubeinrichtung und der daran gekoppelten Folgebewegung des Wechselaufbaus angegeben:

| Hubbewegung | | Folgebewegung des Wechselaufbaus | |
|---|---|---|---|
| H1 (Fig. 2) | ↕ | V1 Ver- bzw. Entriegeln (Fig. 2) | ↔ |
| H2 (Fig. 3) | ↕ | H2 Heben bzw. Senken (Fig. 3) | ↕ |
| V2 (Fig. 9) | ↔ | V2 Ver- bzw. Entriegeln (Fig. 9) | ↔ |
| V3 (Fig. 10) | ↔ | H3 Heben bzw. Senken (Fig. 10) | ↕ |
| H30 (Fig. 20) | ↕ | V30 Ver- bzw. Entriegeln (Fig. 20) | ↔ |
| H40 (Fig. 20) | ↕ | H40 Heben bzw. Senken (Fig. 20) | ↕ |

H10 ↕ = H6 ↕ Entsichern der Sperrvorrichtung
(Fig. 20) (Fig. 15, 18)

H20 ↕ = H4 ↕ Entsperren des Sperrvorrichtung
(Fig. 20) (Fig. 12, 15)

H11, H12, H21 ↕ Leerhub

## Patentansprüche

1. Transportfahrzeug (20) mit
   - einem Fahrgestell (22) mit Wechselvorrichtung,
   - einem auf das Fahrgestell mit Wechselvorrichtung lösbar aufsetzbaren Wechselaufbau (23),
   - einer Hubeinrichtung (29; 80, 81; 100; 111; 139),
   - einer Steuereinrichtung (32; 91) zum Steuern der Hubeinrichtung und
   - an der Wechselvorrichtung und an dem Wechselaufbau (23) angeordneten Verriegelungselementen (27, 28), die beim Aufsetzen des Wechselaufbaus (23) lösbar jeweils miteinander in Eingriff bringbar sind,
   -- wobei der Wechselaufbau (23) beim Aufsetzen eine Senkbewegung und Verriegelungsbewegung und beim Absetzen eine Entriegelungsbewegung und Hebebewegung durchführt,
   **dadurch gekennzeichnet**, daß nur durch die Hubbewegung (H1, H2; V2; V3; H30; H40) der Hubeinrichtung
   - die Aufsetzbewegung (Senken (H2; H3; H40) und das Verriegeln (V1; V2; V30)) des Wechselaufbaus und/oder
   - die Absetzbewegung (Entriegeln (V1; V2; V30) und das Heben (H2; H3; H40)) des Wechselaufbaus ausgelöst und/oder durchgeführt wird.

2. Transportfahrzeug nach Anspruch 1,
   **dadurch gekennzeichnet**, daß
   - die Hubeinrichtung zumindest ein Kolben-Zylinder-Aggregat (29; 80, 81) aufweist,
   - das Kolben-Zylinder-Aggregat (29; 80, 81) im wesentlichen parallel zur Hebe- bzw. Senkbewegungsrichtung des Wechselaufbaus (23) angeordnet ist,
   - das Kolben-Zylinder-Aggregat (29; 80, 81) die Hebe-bzw. Senkbewegung (H2; H40) des Wechselaufbaus (23) durchführt und
   - das Kolben-Zylinder-Aggregat (29; 80, 81) auf eine Verschiebevorrichtung (36; 83) einwirkt, die aufgrund der Hubbewegung (H1; H30) des Kolben-Zylinder-Aggregats (29; 80, 81) vor der Hebebewegung bzw. nach der Senkbewegung die Entriegelungs- bzw. Verriegelungsbewegung

13

(V1; V30) des Wechselaufbaus durchführt.

3. Transportfahrzeug nach Anspruch 2,
   **dadurch gekennzeichnet**, daß
   - die Verschiebevorrichtung am Fahrgestell als drehbar gelagerter Hebel (36; 83) ausgebildet ist,
     -- der eine erste Ausnehmung (64) aufweist, in die das Kolben-Zylinder-Aggregat (29; 80, 81) direkt oder indirekt in Eingriff bringbar ist, und
     -- der eine zweite Ausnehmung (65) aufweist, in die eine am Wechselaufbau vorhandene Mitnehmervorrichtung (39) lösbar in Eingriff bringbar ist, wobei durch die Hubbewegung (H1) des Kolben-Zylinder-Aggregats (29; 80, 81) der Hebel (36) um einen vorgebbaren Winkel gedreht wird und der Hebel (36) hierbei auf die Mitnehmervorrichtung (39) einwirkt, wodurch der Wechselaufbau (23) die Verriegelungs-bzw. Entriegelungsbewegung (V1) durchführt.

4. Transportfahrzeug nach einem oder mehreren der Ansprüche 1 bis 3,
   **dadurch gekennzeichnet**, daß an das Kolben-Zylinder-Aggregat (29) ein Führungselement (70) angeschlossen ist, das auf die Verschiebevorrichtung (36) einwirkt und das in einem Führungstragprofil (72) zum Aufnehmen der beim Verschiebevorgang (Ver- bzw. Entriegeln) des Wechselaufbaus auftretenden Querkräfte auf das Kolben-Zylinder-Aggregat (29) bzw. die Kolbenstange (33) geführt wird.

5. Transportfahrzeug nach Anspruch 1,
   **dadurch gekennzeichnet**, daß
   - die Hubeinrichtung zumindest ein Kolben-Zylinder-Aggregat (100) aufweist,
   - das Kolben-Zylinder-Aggregat (100) im wesentlichen parallel zur Entriegelungs- bzw. Verriegelungs-Bewegungsrichtung angeordnet ist,
   - das Kolben-Zylinder-Aggregat (100) die Entriegelungsbzw. Verriegelungsbewegung (V2) durchführt und
   - das Kolben-Zylinder-Aggregat (100) auf eine Hubvorrichtung (106) einwirkt, die aufgrund der Hubbewegung (V3) des Kolben-Zylinder-Aggregats (100) nach der Entriegelungsbewegung bzw. vor der Verriegelungsbewegung (V2) die Hub- bzw. Senkbewegung (H3) des Wechselaufbaus durchführt.

6. Transportfahrzeug nach Anspruch 5,
   **dadurch gekennzeichnet**, daß die Hubvorrichtung als Hubschwinge (106) ausgebildet ist, die am Fahrgestell (22) gelenkig angeschlossen ist (Punkt B), auf der der Wechselaufbau gelenkig verschiebbar gelagert (Punkt D) ist und deren Neigung durch einen am Kolben-Zylinder-Aggregat (100) angelenkten und auf die Hubschwinge einwirkenden Hebel (104) infolge der Hubbewegung (V3) des Kolben-Zylinder-Aggregats (100) veränderbar ist, wodurch der Wechselaufbau eine Hebe- bzw. Senkbewegung (H3) durchführt.

7. Transportfahrzeug nach Anspruch 5,
   **dadurch gekennzeichnet**, daß an das Kolben-Zylinder-Aggregat (100) eine Aufnahmevorrichtung (102) angeschlossen ist, in die eine am Wechselaufbau vorhandene Mitnehmervorrichtung (103) lösbar in Eingriff bringbar ist, wobei das Kolben-Zylinder-Aggregat (100) nach einem der Länge der Entriegelungs- bzw. Verriegelungsbewegung entsprechenden Freihub (V2) auf die Hubvorrichtung (106) einwirkt.

8. Transportfahrzeug nach Anspruch 1,
   **dadurch gekennzeichnet**, daß das Transportfahrzeug auf beiden Seiten im vorderen Bereich vor dem Wechselaufbau und im Bereich der Hinterachse des Fahrzeugs jeweils zumindest ein vorderes (80, 81) und ein hinteres Kolben-Zylinder-Aggregat (87, 88) aufweist, wobei die Kolben-Zylinder-Aggregate gleiche Kolbendurchmesser und gleiche Kolbenstangendurchmesser aufweisen und in Gleichlaufschaltung in Reihe geschaltet sind.

9. Transportfahrzeug nach Anspruch 2, 8,
   **dadurch gekennzeichnet**, daß die Verschiebevorrichtung jeweils an den vorderen und/oder hinteren Kolben-Zylinder-Aggregaten angeordnet ist.

**10.** Transportfahrzeug nach Anspruch 4, 8,
**dadurch gekennzeichnet**, daß das Führungselement jeweils an den vorderen und/oder hinteren Kolben-Zylinder-Aggregaten vorhanden ist.

**11.** Transportfahrzeug nach Anspruch 9 oder 10,
**dadurch gekennzeichnet**, daß die nicht an der Entriegelungs- bzw. Verriegelungsbewegung beteiligten Kolben-Zylinder-Aggregate einen der Länge der Entriegelungs- bzw. Verriegelungsbewegung entsprechenden Leerhub aufweisen.

**12.** Transportfahrzeug mit
- einem Fahrgestell mit Wechselvorrichtung,
- einem auf das Fahrgestell mit Wechselvorrichtung lösbar aufsetzbaren Wechselaufbau,
- einer Hubeinrichtung,
- einer Steuereinrichtung zum Steuern der Hubeinrichtung,
- -- wobei der Wechselaufbau beim Aufsetzen eine Senkbewegung und Verriegelungsbewegung und beim Absetzen eine Entriegelungsbewegung und Hebebewegung durchführt, und
- einer Sperrvorrichtung, die eine Bewegung des Wechselaufbau in Entriegelungsrichtung verhindert, insbesondere nach einem oder mehreren der vorstehenden Ansprüche,
**dadurch gekennzeichnet**, daß durch die Hubbewegung (H4) der Hubeinrichtung (111; 139) beim Absetzen des Wechselaufbaus vor dem Durchführen der Entriegelungsbewegung (V5) die Sperrvorrichtung (110, 120) entsperrt wird und beim Aufsetzen des Wechselaufbaus nach dem Durchführen der Verriegelungsbewegung (V5) die Sperrvorrichtung (110, 120) den Wechselaufbau sperrt.

**13.** Transportfahrzeug nach Anspruch 12,
**dadurch gekennzeichnet**, daß das Sperren bzw. Entsperren des Wechselaufbaus jeweils unter Einwirkung eines Kolben-Zylinder-Aggregats hergestellt und/oder aufgehoben wird.

**14.** Transportfahrzeug nach Anspruch 13,
**dadurch gekennzeichnet**, daß die Sperrvorrichtung (110) bereichsweise eine Kontur aufweist, die im gesperrten Zustand des Wechselaufbaus formschlüssig mit einem fahrzeugfesten Bauteil (113) mit entsprechender Gegenkontur eingreift, und die Sperrvorrichtung (110) durch die Hubbewegung (H4) des Kolben-Zylinder-Aggregats so weit verschiebbar ist, daß der Wechselaufbau entsperrt ist.

**15.** Transportfahrzeug nach Anspruch 12 bis 14,
**dadurch gekennzeichnet**, daß
- eine Sicherungsvorrichtung (130) vorhanden ist,
- -- die die Sperrvorrichtung (120) im Sperrzustand in ihrer Lage sichert und
- -- die durch die Hubbewegung (H6) eines Kolben-Zylinder-Aggregats (139) entsichert wird.

**16.** Transportfahrzeug nach Anspruch 1,
**dadurch gekennzeichnet**, daß zumindest ein Kolben-Zylinder-Aggregat vorhanden ist, das vor bzw. nach dem Auslösen bzw. Durchführen der Absetz- bzw. Aufsetzbewegung des Wechselaufbaus einen Leerhub aufweist.

**17.** Transportfahrzeug nach Anspruch 12 oder 15,
**dadurch gekennzeichnet**, daß nicht an der Sperrbewegung bzw. Entsperrbewegung (H4) und/oder Sicherungs- bzw. Entsicherungsbewegung (H6) beteiligte Kolben-Zylinder-Aggregate einen der Länge der Hubbewegung (H4; H6) für die Sperrung bzw. Entsperrung und/oder Sicherung bzw. Entsicherung entsprechenden Leerhub (H12; H11) aufweisen.

## Claims

**1.** Transporting vehicle (20) having a chassis (22) with interchanging apparatus, having an interchangeable body (23) which can be releasably mounted on the chassis by the interchanging apparatus, having a lifting apparatus (29; 80, 81; 100; 111; 139), having a control device (32; 91) for controlling the lifting apparatus and having locking elements (27, 28) which are arranged on the interchanging apparatus and on the interchangeable body (23) and can each be releasably brought into engagement upon mounting of the interchangeable body (23), said interchangeable body (23) carrying out, upon mounting, a lowering movement and locking movement and, upon removal, an unlocking movement and lifting movement, characterized in that the mounting movement (lowering (H2; H3; H40) and the locking (V1; V2; V30)) of the interchangeable body and/or the removal movement (unlocking (V1; V2; V30) and the lifting (H2; H3; H40)) of the interchangeable body are triggered and/or carried out only by the lifting movement (H1, H2; V2; V3; H30; H40) of the lifting apparatus.

2. Transporting vehicle according to Claim 1, characterized in that the lifting apparatus exhibits at least one piston/cylinder unit (29; 80, 81), the piston/cylinder unit (29; 80, 81) is arranged essentially parallel to the lifting-movement and lowering-movement direction of the interchangeable body (23), the piston/cylinder unit (29; 80, 81) carries out the lifting movement and lowering movement (H2; H40) of the interchangeable body (23), and the piston/cylinder unit (29; 80, 81) acts on a displacement device (36; 83) which, due to the lifting movement (H1; H30) of the piston/cylinder unit (29; 80, 81), carries out the unlocking movement or locking movement (V1; V30) of the interchangeable body before the lifting movement or after the lowering movement, respectively.

3. Transporting vehicle according to Claim 2, characterized in that the displacement device on the chassis is designed as a rotatably mounted lever (36; 83) which exhibits a first cutout (64), into which the piston/cylinder unit (29; 80, 81) can be brought into engagement directly or indirectly, and which exhibits a second cutout (65) into which a driver device (39) provided on the interchangeable body can be releasably brought into engagement, the lever (36), due to the lifting movement (H1) of the piston/cylinder unit (29; 80, 81), being rotated through a predeterminable angle and the lever (36), in this arrangement, acting on the driver device (39), as a result of which the interchangeable body (23) carries out the locking movement or unlocking movement (V1).

4. Transporting vehicle according to one or more of Claims 1 to 3, characterized in that connected to the piston/cylinder unit (29) is a guide element (70) which acts on the displacement device (36) and is guided in a guide carrying profile (72) in order to absorb the transverse forces on the piston/cylinder unit (29) and/or the piston rod (33) which arise during the displacement (locking and/or unlocking) of the interchangeable body.

5. Transporting vehicle according to Claim 1, characterized in that the lifting apparatus exhibits at least one piston/cylinder unit (100), the piston/cylinder unit (100) is arranged essentially parallel to the unlocking-movement and locking-movement direction, the piston/cylinder unit (100) carries out the unlocking movement and locking movement (V2), and the piston/cylinder unit (100) acts on a lifting apparatus (106) which, due to the lifting movement (V3) of the piston/cylinder unit (100), carries out the lifting movement or lowering movement (H3) of the interchangeable body after the unlocking movement or before the locking movement (V2), respectively.

6. Transporting vehicle according to Claim 5, characterized in that the lifting apparatus is designed as a lifting rocker (106) which is connected (point B) in an articulated manner on the chassis (22), on which the interchangeable body is mounted (point D) in an articulated manner such that it can be displaced, and the inclination of which can be changed, due to the lifting movement (V3) of the piston/cylinder movement (100), by a lever (104) articulated on the piston/cylinder unit (100) and acting on the lifting rocker, as a result of which the interchangeable body carries out a lifting and/or lowering movement (H3).

7. Transporting vehicle according to Claim 5, characterized in that connected to the piston/cylinder unit (100) is a receiving device (102) into which a driver device (103) provided on the interchangeable body can be releasably brought into engagement, the piston/cylinder unit (100) acting on the lifting apparatus (106) after a free stroke (V2) corresponding to the length of the unlocking and/or locking movement.

8. Transporting vehicle according to Claim 1, characterized in that the transporting vehicle exhibits, on both sides, in the front region in front of the interchangeable body and in the region of the rear axle of the vehicle, in each case at least one front piston/cylinder unit (80/81) and one rear piston/cylinder unit (87,88), said piston/cylinder units having the same piston diameters and the same piston-rod diameters and being connected synchronously in series.

**EP 0 490 366 B1**

9. Transporting vehicle according to Claims 2, 8, characterized in that the displacement device is arranged respectively on the front and/or rear piston/cylinder units.

10. Transporting vehicle according to Claims 4, 8, characterized in that the guide element is provided respectively on the front and/or rear piston/cylinder units.

11. Transporting vehicle according to Claim 9 or 10, characterized in that those piston/cylinder units which are not involved in the unlocking and/or locking movement have an idle stroke corresponding to the length of the unlocking and/or locking movement.

12. Transporting vehicle having a chassis with interchanging apparatus, having an interchangeable body which can be releasably mounted on the chassis by the interchanging apparatus, having a lifting apparatus, having a control device for controlling the lifting apparatus, said interchangeable body carrying out, upon mounting, a lowering movement and locking movement and, upon removal, an unlocking movement and lifting movement, and having an arresting device which prevents movement of the interchangeable body in the unlocking direction, in particular in accordance with one or more of the preceding claims, characterized in that, by the lifting movement (H4) of the lifting apparatus (111; 139), upon removal of the interchangeable body, the arresting device (110, 120) is released before the unlocking movement (V5) is carried out and, upon mounting of the interchangeable body, the arresting device (110, 120) arrests the interchangeable body after the locking movement (V5) has been carried out.

13. Transporting vehicle according to Claim 12, characterized in that the arresting and/or releasing of the interchangeable body is produced and/or cancelled with the action of a piston/cylinder unit in each case.

14. Transporting vehicle according to Claim 13, characterized in that, in certain areas, the arresting device (110) has a contour which, in the arrested state of the interchangeable body, is in engagement in a positively locking manner with a component (113) which is fixed to the vehicle and is of a corresponding mating contour, and the arresting device (110) can be displaced, by the lifting movement (H4) of the piston/cylinder unit, to such an extent that the interchangeable body is released.

15. Transporting vehicle according to Claims 12 to 14, characterized in that provision is made for a securing device (130) which secures the arresting device (120) in position in the arrested state, and which is disengaged by the lifting movement (H6) of a piston/cylinder unit (139).

16. Transporting vehicle according to Claim 1, characterized in that there is present at least one piston/cylinder unit which has an idle stroke before and/after the removal movement and/or mounting movement of the interchangeable body has been triggered and/or carried out.

17. Transporting vehicle according to Claim 12 or 15, characterized in that piston/cylinder units which are not involved in the arresting movement and/or releasing movement (H4) and/or securing movement and/or disengaging movement (H6) have an idle stroke (H12; H11) which corresponds to the length of the lifting movement (H4; H6) for arresting and/or releasing and/or securing and/or disengaging.

**Revendications**

1. Véhicule de transport (20) comprenant
   - un châssis (22) muni d'un dispositif de remplacement,
   - une carrosserie interchangeable (23) pouvant être mise en place, de manière amovible, sur le châssis muni du dispositif de remplacement,
   - un dispositif de levage (29 ; 80, 81 ; 100 ; 111 ; 139),
   - un dispositif de commande (32 ; 91) pour commander le dispositif de levage et
   - des éléments de verrouillage (27, 28) qui se trouvent sur le dispositif de remplacement et sur la carrosserie interchangeable (23) et qui, lors de la mise en place de la carrosserie interchangeable (23), peuvent être respectivement mis en prise mutuelle, de manière libérable,
     -- la carrosserie interchangeable (23) effectuant un mouvement d'abaissement et un mouvement de verrouillage lors de la mise en place et, lors de l'enlèvement, un mouvement de déverrouillage

17

et un mouvement de soulèvement,
caractérisé par le fait que
seule la course (H1, H2 ; V2 ; V3 ; H30 ; H40) du dispositif de levage autorise le déclenchement et/ou l'exécution
- du mouvement de mise en place [abaissement (H2 ; H3 ; H40) et verrouillage (V1 ; V2 ; V30)] de la carrosserie interchangeable, et/ou
- le mouvement d'enlèvement [déverrouillage (V1 ; V2 ; V30) et soulèvement (H2 ; H3 ; H40)] de la carrosserie interchangeable.

2. Véhicule de transport selon la revendication 1,
caractérisé par le fait que
- le dispositif de levage présente au moins un vérin (29 ; 80, 81),
- le vérin (29 ; 80, 81) est agencé, pour l'essentiel, parallèlement à la direction du mouvement respectif de soulèvement ou d'abaissement de la carrosserie interchangeable (23),
- le vérin (29 ; 80, 81) exécute le mouvement respectif de soulèvement ou d'abaissement (H2 ; H40) de la carrosserie interchangeable (23), et
- le vérin (29 ; 80, 81) agit sur un dispositif de coulissement (36 ; 83) qui, par suite de la course (H1; H30) du vérin (29 ; 80, 81), exécute le mouvement respectif de déverrouillage ou de verrouillage (V1 ; V30) de la carrosserie interchangeable avant le mouvement de soulèvement ou après le mouvement d'abaissement.

3. Véhicule de transport selon la revendication 2,
caractérisé par le fait que
- le dispositif de coulissement est ménagé sur le châssis, sous la forme d'un levier (36 ; 83) monté à rotation
-- qui comporte un premier évidement (64) dans lequel le vérin (29 ; 80, 81) peut être directement ou indirectement mis en prise, et
-- qui comporte un second évidement (65) dans lequel un dispositif d'entraînement (39), situé sur la carrosserie interchangeable, peut être mis en prise de manière libérable, la course (H1) du vérin (29 ; 80, 81) ayant pour effet d'imprimer, au levier (36), une rotation d'un angle pouvant être préétabli, et ledit levier (36) agissant alors sur le dispositif d'entraînement (39) de façon telle que la carrosserie interchangeable (23) exécute le mouvement respectif de verrouillage ou de déverrouillage (V1).

4. Véhicule de transport selon l'une ou plusieurs des revendications 1 à 3,
caractérisé par le fait
qu'un élément de guidage (70), rattaché au vérin (29), agit sur le dispositif de coulissement (36) et est guidé dans un profilé (72) de guidage et de support, afin d'absorber les forces transversales respectivement appliquées au vérin (29) ou à la tige (33) du piston lors du processus de coulissement (verrouillage ou déverrouillage) de la carrosserie interchangeable.

5. Véhicule de transport selon la revendication 1,
caractérisé par le fait que

- le dispositif de levage présente au moins un vérin (100),
- le vérin (100) est agencé, pour l'essentiel, parallèlement à la direction du mouvement respectif de déverrouillage ou de verrouillage,
- le vérin (100) exécute le mouvement respectif de déverrouillage ou de verrouillage (V2), et
- le vérin (100) agit sur un système de levage (106) qui, par suite de la course (V3) du vérin (100), exécute le mouvement respectif de soulèvement ou d'abaissement (H3) de la carrosserie interchangeable après le mouvement de déverrouillage ou avant le mouvement de verrouillage (V2).

6. Véhicule de transport selon la revendication 5,
caractérisé par le fait que
le système de levage est réalisé sous la forme d'une biellette de levage (106) qui est rattachée au châssis (22) de manière articulée (point B), sur laquelle la carrosserie interchangeable est montée à coulissement articulé (point D), et dont l'inclinaison peut être modifiée, par suite de la course (V3) du vérin (100), par l'intermédiaire d'un levier (104) articulé sur ledit vérin (100) et agissant sur la biellette de levage, de sorte que la carrosserie interchangeable exécute un mouvement respectif de soulèvement ou d'abaissement (H3).

7. Véhicule de transport selon la revendication 5,
caractérisé par le fait
qu'un dispositif récepteur (102), dans lequel un dispositif d'entraînement (103) situé sur la carrosserie interchangeable peut être mis en prise de manière libérable, est rattaché au vérin (100), ledit vérin (100) agissant sur le système de levage (106) après une course libre (V2) correspondant à la longueur du mouvement respectif de déverrouillage ou de verrouillage.

8. Véhicule de transport selon la revendication 1,
caractérisé par le fait que
ledit véhicule de transport comporte respectivement des deux côtés, dans la région antérieure située devant la carrosserie interchangeable et dans la région de l'essieu arrière du véhicule, au moins un vérin antérieur (80, 81) et un vérin postérieur (87, 88), les vérins présentant des diamètres de pistons identiques et des diamètres identiques des tiges des pistons, et étant installés en série selon un montage synchrone.

9. Véhicule de transport selon la revendication 2, 8,
caractérisé par le fait que
le dispositif de coulissement se trouve, respectivement, sur les vérins antérieurs et/ou postérieurs.

10. Véhicule de transport selon la revendication 4, 8,
caractérisé par le fait que
l'élément de guidage est disposé, respectivement, sur les vérins antérieurs et/ou postérieurs.

11. Véhicule de transport selon la revendication 9 ou 10,
caractérisé par le fait que
les vérins ne prenant pas part au mouvement respectif de déverrouillage ou de verrouillage présentent une course à vide correspondant à la longueur du mouvement respectif de déverrouillage ou de verrouillage.

12. Véhicule de transport comprenant
- un châssis muni d'un dispositif de remplacement,
- une carrosserie interchangeable pouvant être mise en place, de manière amovible, sur le châssis muni du dispositif de remplacement,
- un dispositif de levage,
- un dispositif de commande pour commander le dispositif de levage,
-- la carrosserie interchangeable exécutant un mouvement d'abaissement et un mouvement de verrouillage lors de la mise en place et, lors de l'enlèvement, un mouvement de déverrouillage et un mouvement de soulèvement, et
- un système de blocage empêchant un mouvement de la carrosserie interchangeable dans la direction du déverrouillage, notamment selon l'une ou plusieurs des revendications précédentes,
caractérisé par le fait que
le système de blocage (110, 120) est débloqué par suite de la course (H4) du dispositif de levage (111 ; 139) lors de l'enlèvement de la carrosserie interchangeable, avant l'exécution du mouvement de déverrouillage (V5), et ledit système de blocage (110, 120) bloque la carrosserie interchangeable lors de la mise en place de cette carrosserie interchangeable, après l'exécution du mouvement de verrouillage (V5).

13. Véhicule de transport selon la revendication 12, caractérisé par le fait que le blocage ou le déblocage de la carrosserie interchangeable est respectivement établi et/ou supprimé sous l'action d'un vérin.

14. Véhicule de transport selon la revendication 13, caractérisé par le fait que
le système de blocage (110) présente, par zones, une configuration qui vient en prise par concordance de formes, a l'état bloqué de la carrosserie interchangeable, avec une pièce structurelle (113) assujettie au véhicule et pourvue d'une configuration complémentaire correspondante, et le système de blocage (110) peut être animé, suite à la course (H4) du vérin, d'un coulissement propre à débloquer la carrosserie interchangeable.

15. Véhicule de transport selon les revendications 12 à 14,
caractérisé par
- la présence d'un système d'arrêt (130)
-- qui consigne à demeure le système de blocage (120) à l'état bloqué et
-- qui est neutralisé par la course (H6) d'un vérin (139).

16. Véhicule de transport selon la revendication 1,
caractérisé par
la présence d'au moins un vérin qui présente, respectivement, une course à vide avant ou après le déclenchement ou l'exécution du mouvement respectif d'enlèvement ou de mise en place de la carrosserie interchangeable.

17. Véhicule de transport selon la revendication 12 ou 15,
caractérisé par le fait que
des vérins, ne prenant pas part au mouvement respectif de blocage ou de déblocage (H4) et/ou au mouvement respectif d'arrêt ou de libération (H6), présentent une course à vide (H12 ; H11) correspondant à la longueur de la course (H4 ; H6) respectivement destinée au blocage ou au déblocage et/ou à l'arrêt ou à la libération.

FIG.1

FIG.2

FIG.3

FIG.4

EP 0 490 366 B1

FIG.5

FIG.6

FIG.7

FIG.8

FIG.9

FIG.10

FIG.11

FIG.12

FIG.13

FIG. 14

FIG. 15

FIG. 16

FIG.17

FIG.18

FIG.19

HEBEN DES WECHSELAUFBAUS

VERSCHIEBEVORRICHTUNG

V30

ENTRIEGELN DES WECHSELAUFBAUS

SPERRVORRICHTUNG

ENTSPERREN DER SPERR VORRICHT.

SICHERUNGSVORRICHTUNG

ENTSICHERN DER SPERR VORRICHT.

FIG.20